(19) 

**Europäisches Patentamt**
**European Patent Office**
**Office européen des brevets**

(11) **EP 4 768 242 A1**

(12) **EUROPEAN PATENT APPLICATION**
published in accordance with Art. 153(4) EPC

(43) Date of publication:
**01.07.2026 Bulletin 2026/27**

(21) Application number: **24856539.2**

(22) Date of filing: **23.08.2024**

(51) International Patent Classification (IPC):
*B32B 27/32* (2006.01)   *B32B 7/022* (2019.01)
*B32B 9/00* (2006.01)   *B32B 27/00* (2006.01)
*B65D 65/40* (2006.01)   *C08J 7/00* (2006.01)
*C08J 7/048* (2020.01)

(52) Cooperative Patent Classification (CPC):
**B32B 7/022; B32B 9/00; B32B 27/00; B32B 27/32;**
**B65D 65/40; C08J 7/00; C08J 7/048**

(86) International application number:
**PCT/JP2024/029980**

(87) International publication number:
**WO 2025/041851 (27.02.2025 Gazette 2025/09)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **24.08.2023   JP 2023135998**
**20.10.2023   JP 2023180829**
**19.04.2024   JP 2024068684**

(71) Applicant: **Dai Nippon Printing Co., Ltd.**
**Tokyo 162-8001 (JP)**

(72) Inventors:
• **ISHIKAWA, Shun**
**Tokyo 162-8001 (JP)**
• **HASEGAWA, Takayuki**
**Tokyo 162-8001 (JP)**
• **KONO, Shinichiro**
**Tokyo 162-8001 (JP)**
• **NAKATA, Mariko**
**Tokyo 162-8001 (JP)**

• **TAKUSHIMA, Kazuhiro**
**Tokyo 162-8001 (JP)**
• **MORIMOTO, Taro**
**Tokyo 162-8001 (JP)**
• **KOICHI, Chisayo**
**Tokyo 162-8001 (JP)**
• **ONO, Yoshiyuki**
**Tokyo 162-8001 (JP)**
• **TAKAHASHI, Hideaki**
**Tokyo 162-8001 (JP)**
• **WATANABE, Osamu**
**Tokyo 162-8001 (JP)**
• **SUZUKI, Tsuyoshi**
**Tokyo 162-8001 (JP)**
• **ITAMI, Shohei**
**Tokyo 162-8001 (JP)**
• **TAMADA, Shuhei**
**Tokyo 162-8001 (JP)**
• **HACHIYA, Yuki**
**Tokyo 162-8001 (JP)**

(74) Representative: **Müller-Boré & Partner**
**Patentanwälte PartG mbB**
**Friedenheimer Brücke 21**
**80639 München (DE)**

(54) **LAMINATE, PACKAGING BAG, AND HEAT STERILIZATION POUCH**

(57)    As a laminate that can suppress the deterioration of gas barrier properties after retort treatment when used in a packaging bag, such as a retort pouch, the laminate includes at least a barrier film in which a substrate, an inorganic oxide layer, and a barrier covering layer are stacked in this order, an adhesive layer, and a sealant layer, wherein the substrate includes a stretched substrate containing polypropylene as a main component, the sealant layer contains polypropylene as a main component, the barrier film is disposed such that the covering layer faces the adhesive layer, a cross section of the adhesive layer in the laminate has a modulus of elasticity of 100.0 MPa or less as measured with an atomic force microscope (AFM), and an indentation hardness measured from a cross section of the covering layer in the laminate by a nanoindentation method is 0.9 GPa or more and 1.7 GPa or less.

EP 4 768 242 A1

*Fig. 5*

**Description**

Cross-Reference to Related Applications

The present application claims the benefit of Japanese Patent Application No. 2023-135998 filed on August 24, 2023, Japanese Patent Application No. 2023-180829 filed on October 20, 2023, and Japanese Patent Application No. 2024-068684 filed on April 19, 2024, the entire contents of which are incorporated herein by reference.

Technical Field

The present disclosure relates to a laminate, a packaging bag, and a heat-sterilized pouch.

Background Art

Polyester films have good mechanical characteristics, chemical stability, heat resistance, and transparency, and are inexpensive. Thus, polyester films have been used as substrates constituting laminates used for producing packaging bags. Depending on the contents to be filled in a packaging bag, the packaging bag is required to have gas barrier properties, such as oxygen barrier properties. To satisfy this requirement, an inorganic oxide layer containing alumina, silica, or the like is formed on a surface of a polyester film (see, for example, Patent Literature 1). In recent years, alternative substrates to polyester films have been sought.

Citation List

Patent Literature

PTL 1: Japanese Unexamined Patent Application Publication No. 2005-053223

Summary of Invention

Technical Problem

The present inventors have studied the use of a stretched substrate containing polypropylene as a main component instead of a known polyester film as a substrate constituting a laminate. More specifically, from the perspective of recyclability and gas barrier properties, the present inventors have studied the use of a laminate that includes a barrier substrate including the stretched substrate and an inorganic oxide layer and that includes a sealant layer containing polypropylene as a main component. On the basis of study results, the present inventors have found that a packaging bag produced using such a laminate may not have sufficient gas barrier properties after retort treatment.

An object of the present disclosure is to provide a laminate that can suppress the deterioration of the gas barrier properties after retort treatment when used in a packaging bag, such as a retort pouch.

Solution to Problem

A laminate according to the present disclosure includes at least a barrier film in which a substrate, an inorganic oxide layer, and a barrier covering layer are stacked in this order, an adhesive layer, and a sealant layer, wherein the substrate includes a stretched substrate containing polypropylene as a main component, the sealant layer contains polypropylene as a main component, the barrier film is disposed such that the covering layer faces the adhesive layer, a cross section of the adhesive layer in the laminate has a modulus of elasticity of 100.0 MPa or less as measured with an atomic force microscope (AFM), and an indentation hardness measured from a cross section of the covering layer in the laminate by a nanoindentation method is 0.9 GPa or more and 1.7 GPa or less.

Advantageous Effects of Invention

The present disclosure can provide a laminate that can suppress the deterioration of the gas barrier properties after retort treatment when used in a packaging bag, such as a retort pouch.

Brief Description of Drawings

[Fig. 1] Fig. 1 is a schematic cross-sectional view of an embodiment of a laminate.
[Fig. 2] Fig. 2 is a schematic cross-sectional view of an embodiment of a laminate.
[Fig. 3] Fig. 3 is a schematic cross-sectional view of an embodiment of a laminate.
[Fig. 4] Fig. 4 is a schematic cross-sectional view of an embodiment of a laminate.
[Fig. 5] Fig. 5 is a schematic cross-sectional view of an embodiment of a laminate.
[Fig. 6] Fig. 6 is a schematic cross-sectional view of an embodiment of a laminate.
[Fig. 7] Fig. 7 is a schematic cross-sectional view of an embodiment of a laminate.
[Fig. 8] Fig. 8 is a schematic cross-sectional view of an embodiment of a laminate.
[Fig. 9] Fig. 9 is a schematic cross-sectional view of an embodiment of a laminate.
[Fig. 10] Fig. 10 is a schematic cross-sectional view of an embodiment of a laminate.
[Fig. 11] Fig. 11 is a schematic cross-sectional view of an embodiment of a laminate.
[Fig. 12] Fig. 12 is a schematic cross-sectional view of an embodiment of a laminate.
[Fig. 13] Fig. 13 is a schematic cross-sectional view of an embodiment of a laminate.
[Fig. 14] Fig. 14 is a schematic cross-sectional view of an embodiment of a laminate.
[Fig. 15] Fig. 15 is a schematic cross-sectional view of an embodiment of a laminate.
[Fig. 16] Fig. 16 is a schematic cross-sectional view of an embodiment of a laminate.
[Fig. 17] Fig. 17 is a schematic cross-sectional view of an embodiment of a laminate.
[Fig. 18] Fig. 18 is a schematic cross-sectional view of an embodiment of a laminate.
[Fig. 19] Fig. 19 is a schematic cross-sectional view of an embodiment of a laminate.
[Fig. 20] Fig. 20 is a schematic cross-sectional view of an embodiment of a laminate.
[Fig. 21] Fig. 21 is a schematic cross-sectional view of an embodiment of a laminate.
[Fig. 22] Fig. 22 is a schematic cross-sectional view of an embodiment of a laminate.
[Fig. 23] Fig. 23 is a schematic cross-sectional view of an embodiment of a laminate.
[Fig. 24] Fig. 24 is a schematic cross-sectional view of an embodiment of a laminate.
[Fig. 25] Fig. 25 is a schematic cross-sectional view of an embodiment of a laminate.
[Fig. 26] Fig. 26 is a schematic cross-sectional view of an embodiment of a laminate.
[Fig. 27] Fig. 27 is a schematic cross-sectional view of an embodiment of a laminate.
[Fig. 28] Fig. 28 is a schematic cross-sectional view of an embodiment of a laminate.
[Fig. 29] Fig. 29 is a schematic cross-sectional view of an embodiment of a laminate.
[Fig. 30] Fig. 30 is a schematic cross-sectional view of an embodiment of a laminate.
[Fig. 31] Fig. 31 is a schematic cross-sectional view of an embodiment of a laminate.
[Fig. 32] Fig. 32 is a schematic cross-sectional view of an embodiment of a laminate.
[Fig. 33] Fig. 33 is a front view of an embodiment of a packaging bag.
[Fig. 34] Fig. 34 is a perspective view of an embodiment of a packaging bag.

Description of Embodiments

In the present description, when a plurality of upper limit candidates and a plurality of lower limit candidates are described for a certain parameter, any one upper limit candidate and any one lower limit candidate may be combined to configure the numerical range of the parameter. For example, an explanation will be given to the phrase "The parameter B is preferably A1 or more, more preferably A2 or more, still more preferably A3 or more, and is preferably A4 or less, more preferably A5 or less, still more preferably A6 or less." In this example, the numerical range of the parameter B may be A1 or more and A4 or less, A1 or more and A5 or less, A1 or more and A6 or less, A2 or more and A4 or less, A2 or more and A5 or less, A2 or more and A6 or less, A3 or more and A4 or less, A3 or more and A5 or less, or A3 or more and A6 or less.

Embodiments of the present disclosure will be described in detail below. The present disclosure may be embodied in many different forms and should not be construed as being limited to the description of the embodiments exemplified below. In the drawings, to make the description clearer, the width, thickness, shape, and the like of each layer may be schematically illustrated compared to the embodiments; however, these are merely examples and do not limit the interpretation of the present disclosure. In the present description and each drawing, the same reference numerals and letters are given to the same elements as those already described with reference to the preceding drawings, and detailed description thereof may be omitted as appropriate.

As used herein, the term "main component" in a given layer or substrate refers to a component that constitutes more than 50% by mass, preferably 60% or more by mass, more preferably 70% or more by mass, still more preferably 80% or more by mass, of the layer or substrate.

In the following description, each component (for example, polypropylene, α-olefin, a resin material, an additive agent, a gas barrier resin, an adhesive resin, and an inorganic oxide) may be used alone or in combination of two or more types thereof.

[Laminate]

A laminate according to the present disclosure includes at least a barrier film, an adhesive layer, and a sealant layer in the thickness direction.

The barrier film includes a substrate, an inorganic oxide layer, and a barrier covering layer stacked in this order.

The substrate includes a stretched substrate containing polypropylene as a main component.

The sealant layer contains polypropylene as a main component.

A laminate according to the present disclosure may include one substrate or two or more substrates.

A laminate according to the present disclosure may include one adhesive layer or two or more adhesive layers.

The first substrate includes a stretched substrate containing polypropylene as a main component.

The second substrate includes a stretched substrate containing polypropylene as a main component.

The stretched substrate of the first substrate and the stretched substrate of the second substrate may be the same or different.

At least one selected from the first substrate and the second substrate functions as a substrate (barrier substrate) constituting the barrier film.

In the following description, the stretched substrate containing polypropylene as a main component is also referred to as a "polypropylene stretched substrate".

In one embodiment, a laminate according to the present disclosure has a two-layer structure and includes a barrier film, an adhesive layer, and a sealant layer in this order in the thickness direction (hereinafter also referred to simply as "in this order"). In this embodiment, the barrier film is preferably disposed such that the covering layer faces the adhesive layer. A laminate with such an arrangement (that is, an arrangement in which the covering layer and the inorganic oxide layer are located between the substrate and the sealant layer, and the covering layer and the adhesive layer are adjacent to each other) can more effectively suppress, for example, degradation or the like of the covering layer and the inorganic oxide layer.

In one embodiment, a laminate according to the present disclosure has a three-layer structure and includes a first substrate, a second substrate, an adhesive layer, and a sealant layer in this order. In this embodiment, the second substrate is a barrier substrate constituting the barrier film. The barrier film is preferably disposed such that the covering layer faces the adhesive layer. A laminate with such an arrangement (that is, an arrangement in which the covering layer and the inorganic oxide layer are located between the second substrate and the sealant layer, and the covering layer and the adhesive layer are adjacent to each other) can more effectively suppress, for example, degradation or the like of the covering layer and the inorganic oxide layer.

In one embodiment, a laminate according to the present disclosure has a three-layer structure and includes a first substrate, a first adhesive layer, a second substrate, a second adhesive layer, and a sealant layer in this order. In this embodiment, the second substrate is a barrier substrate constituting the barrier film. The barrier film is preferably disposed such that the covering layer faces the first adhesive layer. A laminate with such an arrangement (that is, an arrangement in which the covering layer and the inorganic oxide layer are located between the first substrate and the second substrate, and the covering layer and the first adhesive layer are adjacent to each other) can more effectively suppress, for example, degradation or the like of the covering layer and the inorganic oxide layer.

In one embodiment, a laminate according to the present disclosure has a three-layer structure and includes a first substrate, a first adhesive layer, a second substrate, a second adhesive layer, and a sealant layer in this order. In this embodiment, the first substrate is a barrier substrate constituting the barrier film. The barrier film is preferably disposed such that the covering layer faces the first adhesive layer. A laminate with such an arrangement (that is, an arrangement in which the covering layer and the inorganic oxide layer are located between the first substrate and the second substrate, and the covering layer and the first adhesive layer are adjacent to each other) can more effectively suppress, for example, degradation or the like of the covering layer and the inorganic oxide layer.

A laminate according to the present disclosure has good gas barrier properties. Specific examples of the gas barrier properties include oxygen barrier properties and water vapor barrier properties. In particular, a laminate according to the present disclosure has good oxygen barrier properties. A packaging bag produced using a laminate according to the present disclosure can suppress the deterioration of the gas barrier properties even after heat sterilization treatment, such as retort treatment or boiling treatment. From the perspective that the covering layer and the inorganic oxide layer are more appropriately protected when subjected to heat treatment and the gas barrier properties are stabilized, a laminate with a three-layer structure is preferred, and a laminate in which the covering layer and the inorganic oxide layer are located between the first substrate and the second substrate and the covering layer and the first adhesive layer are adjacent to each other is preferred.

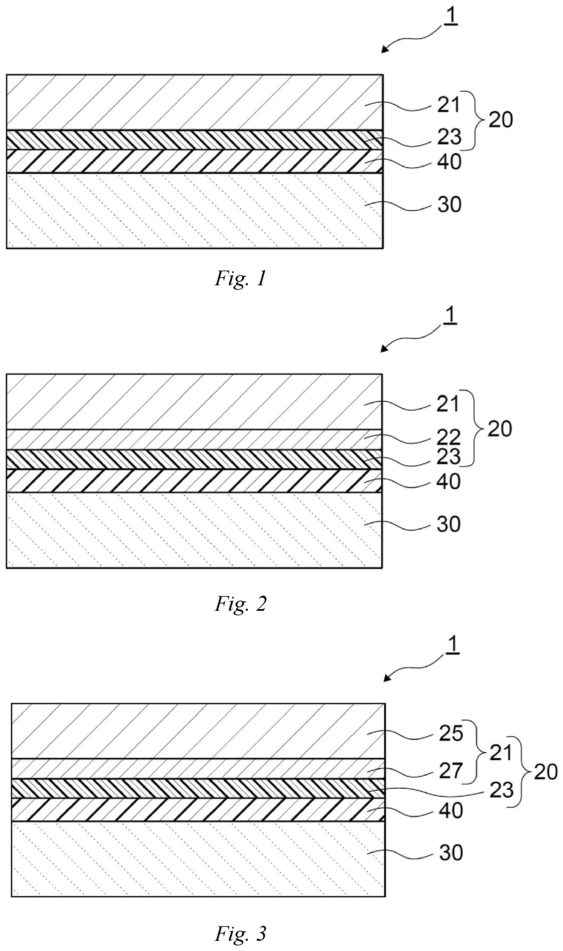

Figs. 1 to 32 are schematic cross-sectional views of an embodiment of a laminate according to the present disclosure.

Laminates 1 illustrated in Figs. 1 to 8 are examples of the two-layer structure.

A laminate 1 illustrated in Fig. 1 includes a barrier film 20, an adhesive layer 40, and a sealant layer 30 in this order.

The barrier film 20 includes a substrate (barrier substrate) 21 and an inorganic oxide layer 23 in this order. In this example, the barrier film 20 is disposed such that the inorganic oxide layer 23 faces the adhesive layer 40 and the substrate 21 is the outermost layer.

Fig. 2 is the same as Fig. 1 except that the barrier film 20 includes a surface coating layer 22 between the substrate 21 and the inorganic oxide layer 23.

Fig. 3 is the same as Fig. 1 except that the substrate 21 includes a polypropylene layer 25 and a surface resin layer 27.

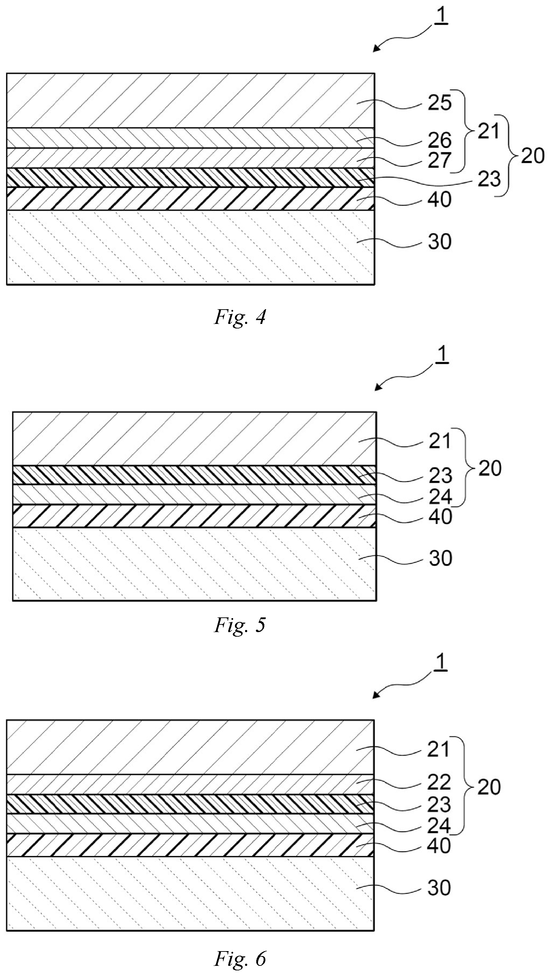

Fig. 4 is the same as Fig. 3 except that the substrate 21 includes an adhesive resin layer 26 between the polypropylene layer 25 and the surface resin layer 27.

Fig. 5 is the same as Fig. 1 except that the barrier film 20 includes the substrate 21, the inorganic oxide layer 23, and a covering layer 24 in this order.

Fig. 6 is the same as Fig. 1 except that the barrier film 20 includes the substrate 21, the surface coating layer 22, the inorganic oxide layer 23, and the covering layer 24 in this order.

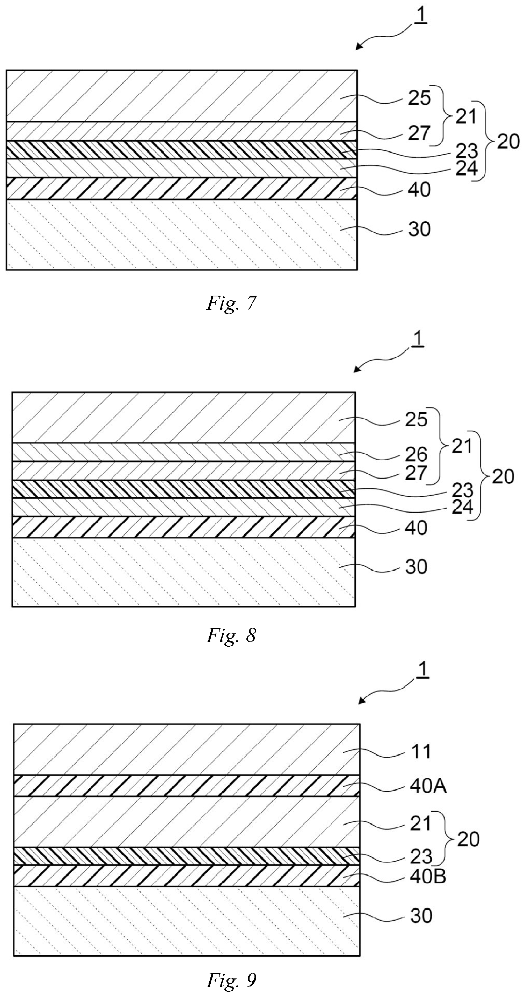

Fig. 7 is the same as Fig. 5 except that the substrate 21 includes the polypropylene layer 25 and the surface resin layer 27.

Fig. 8 is the same as Fig. 7 except that the substrate 21 includes the adhesive resin layer 26 between the polypropylene layer 25 and the surface resin layer 27.

Laminates 1 illustrated in Figs. 9 to 32 are examples of the three-layer structure.

A laminate 1 illustrated in Fig. 9 includes a first substrate (polypropylene stretched substrate) 11, a first adhesive layer 40A, the barrier film 20, a second adhesive layer 40B, and the sealant layer 30 in this order. The barrier film 20 includes a second substrate (barrier substrate) 21 and the inorganic oxide layer 23 in this order. In this example, the barrier film 20 is disposed such that the inorganic oxide layer 23 faces the second adhesive layer 40B and the second substrate 21 faces the first adhesive layer 40A.

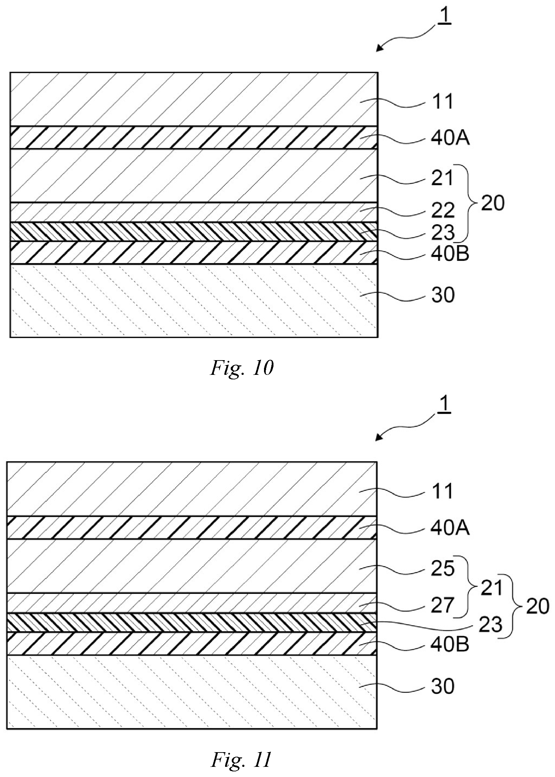

Fig. 10 is the same as Fig. 9 except that the barrier film 20 includes the surface coating layer 22 between the second substrate 21 and the inorganic oxide layer 23.

Fig. 11 is the same as Fig. 9 except that the second substrate 21 includes the polypropylene layer 25 and the surface resin layer 27.

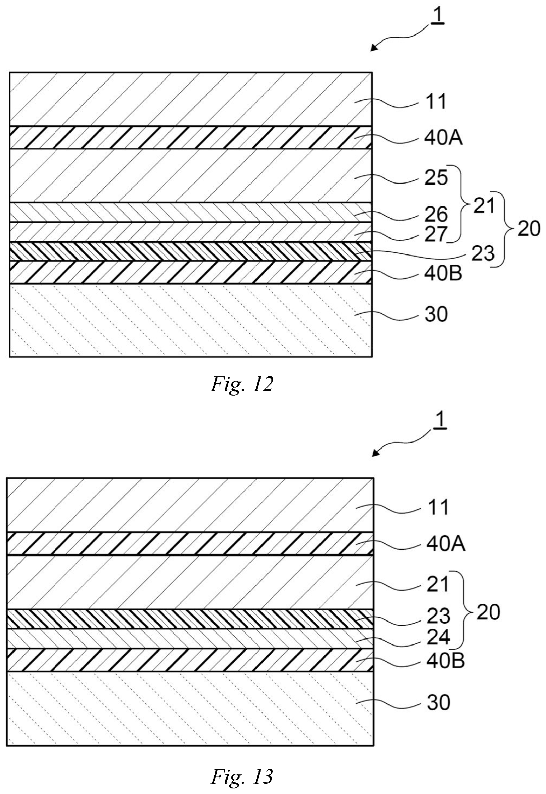

Fig. 12 is the same as Fig. 11 except that the second substrate 21 includes the adhesive resin layer 26 between the polypropylene layer 25 and the surface resin layer 27.

Fig. 13 is the same as Fig. 9 except that the barrier film 20 includes the second substrate 21, the inorganic oxide layer 23, and the covering layer 24 in this order.

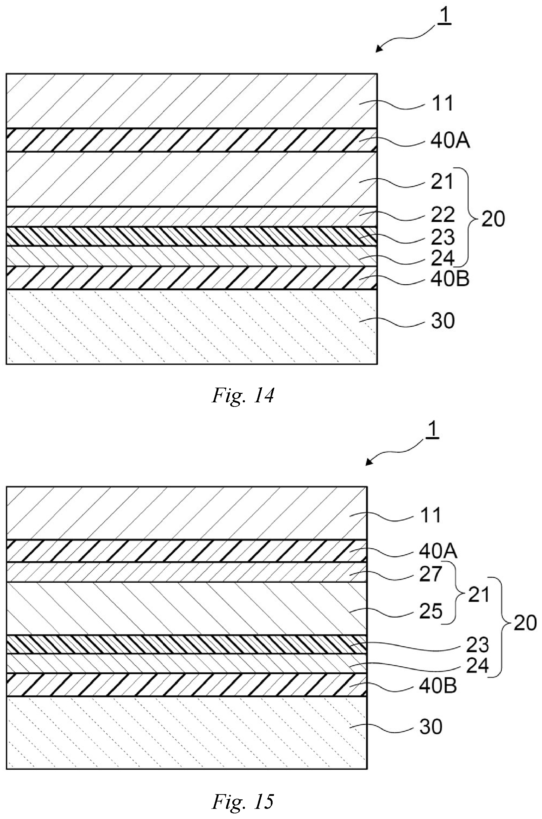

Fig. 14 is the same as Fig. 9 except that the barrier film 20 includes the second substrate 21, the surface coating layer 22, the inorganic oxide layer 23, and the covering layer 24 in this order.

Fig. 15 is the same as Fig. 13 except that the second substrate 21 includes the polypropylene layer 25 and the surface resin layer 27.

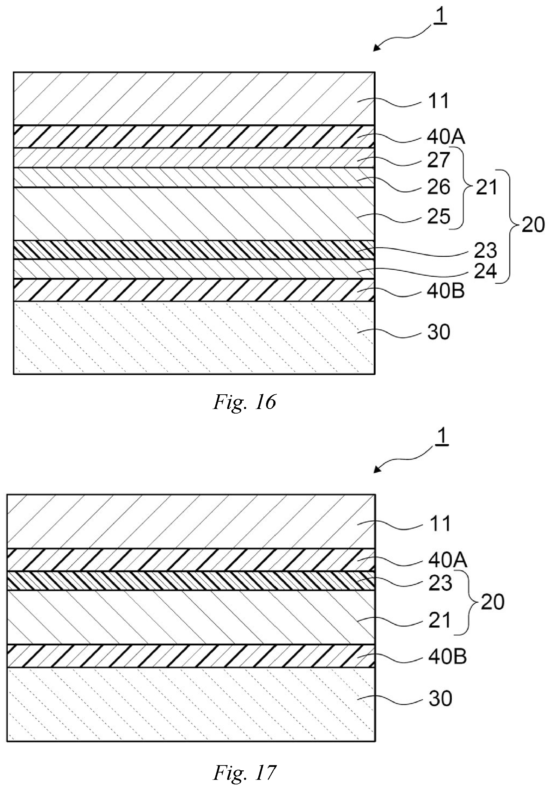

Fig. 16 is the same as Fig. 15 except that the second substrate 21 includes the adhesive resin layer 26 between the polypropylene layer 25 and the surface resin layer 27.

A laminate 1 illustrated in Fig. 17 includes the first substrate (polypropylene stretched substrate) 11, the first adhesive layer 40A, the barrier film 20, the second adhesive layer 40B, and the sealant layer 30 in this order. The barrier film 20 includes the second substrate (barrier substrate) 21 and the inorganic oxide layer 23 in this order. In this example, the barrier film 20 is disposed such that the inorganic oxide layer 23 faces the first adhesive layer 40A and the second substrate 21 faces the second adhesive layer 40B.

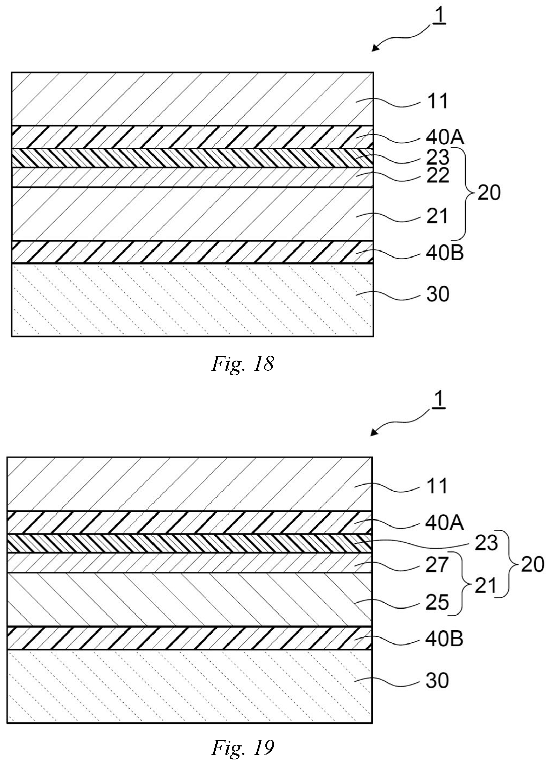

Fig. 18 is the same as Fig. 17 except that the barrier film 20 includes the surface coating layer 22 between the second substrate 21 and the inorganic oxide layer 23.

Fig. 19 is the same as Fig. 17 except that the second substrate 21 includes the polypropylene layer 25 and the surface resin layer 27.

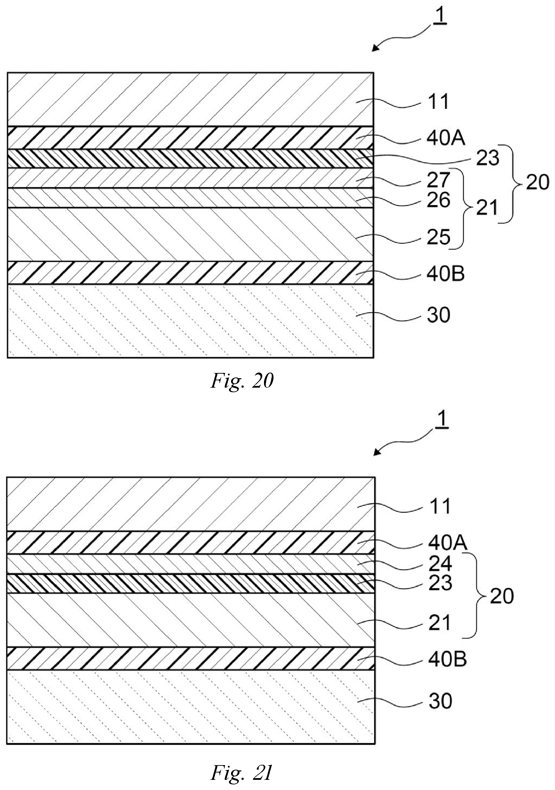

Fig. 20 is the same as Fig. 19 except that the second substrate 21 includes the adhesive resin layer 26 between the polypropylene layer 25 and the surface resin layer 27.

Fig. 21 is the same as Fig. 17 except that the barrier film 20 includes the second substrate 21, the inorganic oxide layer 23, and the covering layer 24 in this order.

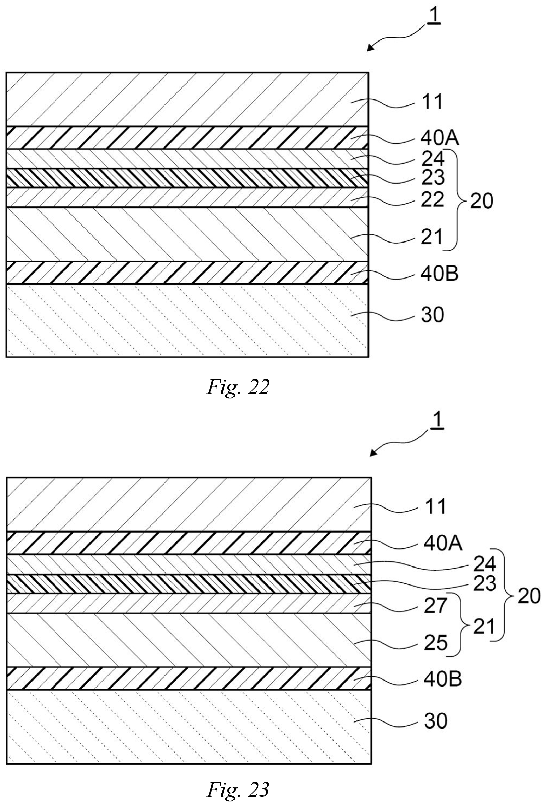

Fig. 22 is the same as Fig. 17 except that the barrier film 20 includes the second substrate 21, the surface coating layer 22, the inorganic oxide layer 23, and the covering layer 24 in this order.

Fig. 23 is the same as Fig. 21 except that the second substrate 21 includes the polypropylene layer 25 and the surface resin layer 27.

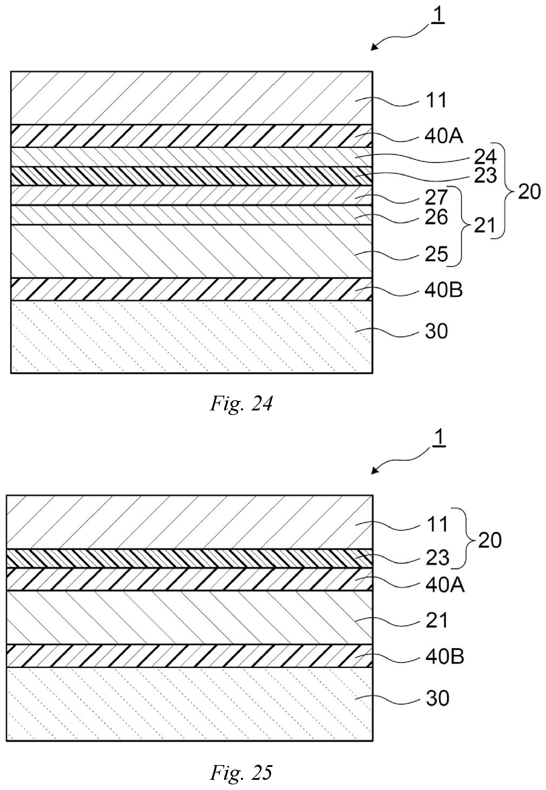

Fig. 24 is the same as Fig. 23 except that the second substrate 21 includes the adhesive resin layer 26 between the polypropylene layer 25 and the surface resin layer 27.

A laminate 1 illustrated in Fig. 25 includes the barrier film 20, the first adhesive layer 40A, a second substrate (polypropylene stretched substrate) 21, the second adhesive layer 40B, and the sealant layer 30 in this order. The barrier film 20 includes a first substrate (barrier substrate) 11 and the inorganic oxide layer 23 in this order. In this example, the barrier film 20 is disposed such that the inorganic oxide layer 23 faces the first adhesive layer 40A and the first substrate 11 is the outermost layer.

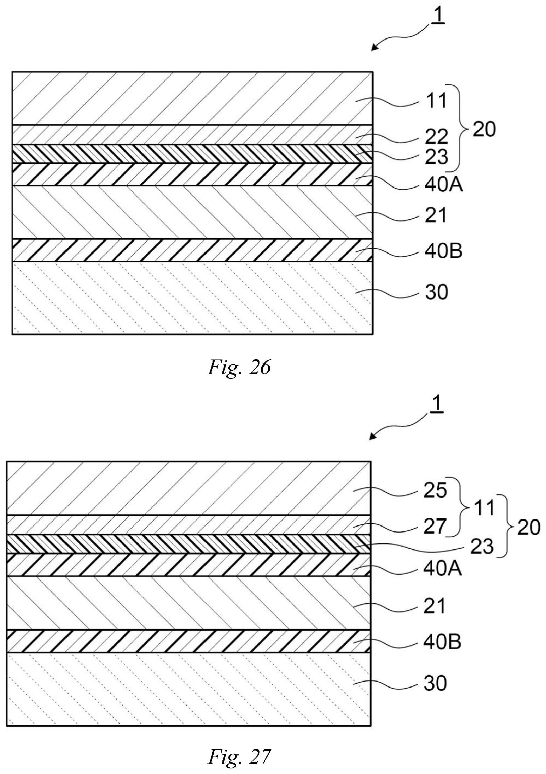

Fig. 26 is the same as Fig. 25 except that the barrier film 20 includes the surface coating layer 22 between the first substrate 11 and the inorganic oxide layer 23.

Fig. 27 is the same as Fig. 25 except that the first substrate 11 includes the polypropylene layer 25 and the surface resin layer 27.

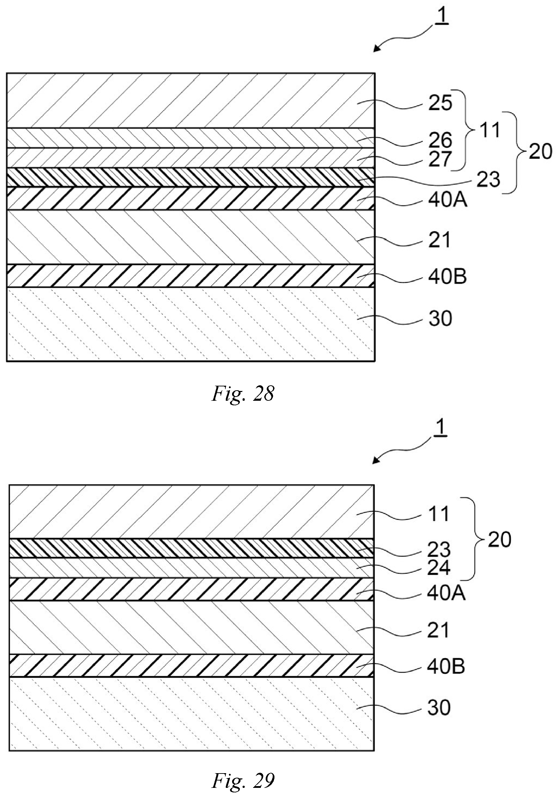

Fig. 28 is the same as Fig. 27 except that the first substrate 11 includes the adhesive resin layer 26 between the polypropylene layer 25 and the surface resin layer 27.

Fig. 29 is the same as Fig. 25 except that the barrier film 20 includes the first substrate 11, the inorganic oxide layer 23, and the covering layer 24 in this order.

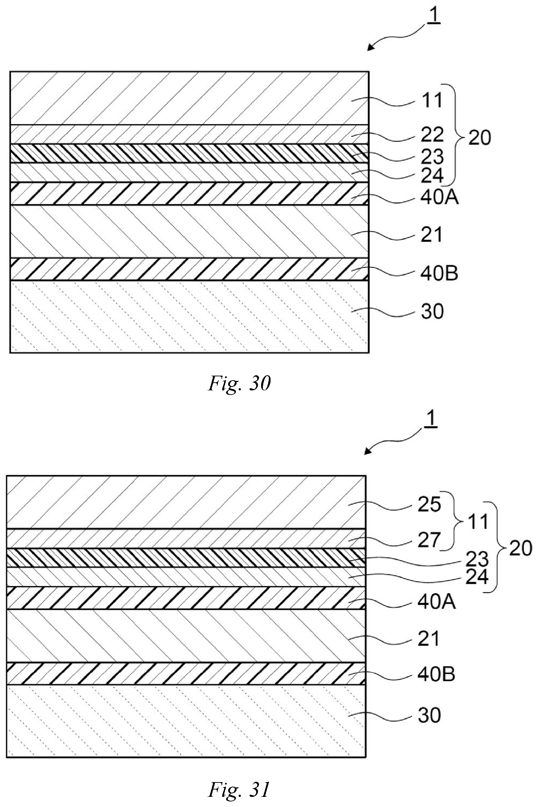

Fig. 30 is the same as Fig. 25 except that the barrier film 20 includes the first substrate 11, the surface coating layer 22, the inorganic oxide layer 23, and the covering layer 24 in this order.

Fig. 31 is the same as Fig. 29 except that the first substrate 11 includes the polypropylene layer 25 and the surface resin layer 27.

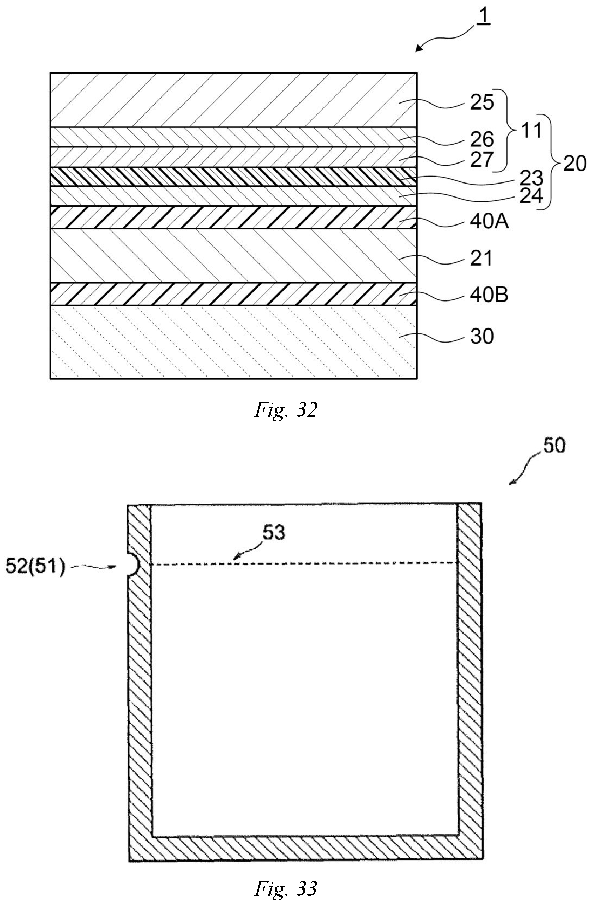

Fig. 32 is the same as Fig. 31 except that the first substrate 11 includes the adhesive resin layer 26 between the polypropylene layer 25 and the surface resin layer 27.

The laminates 1 illustrated in Figs. 1 to 32 are examples of configurations and are not limited thereto. For example, a configuration may have no surface coating layer 22, or a configuration may have an arbitrary layer (for example, a print layer or the like) (not shown) between the above-described arbitrary layers.

The polypropylene content relative to the total amount of resin material contained in a laminate according to the present disclosure is preferably 80% or more by mass, more preferably 85% or more by mass, still more preferably 88% or more by mass, particularly preferably 90% or more by mass. A packaging bag produced using such a laminate has, for example, high recyclability. The upper limit of the polypropylene content relative to the total amount of resin material contained in a laminate according to the present disclosure may be, for example, but is not limited to, 99% by mass, 98% by mass, 97% by mass, 96% by mass, 95% by mass, or 94% by mass.

In the present disclosure, a monomaterialization rate refers to the ratio of the mass of a polypropylene-based single material to the total mass of resin material contained in the laminate. When a layer contains polypropylene as a main component (that is, more than 50% by mass), the monomaterialization rate is calculated on the assumption that the polypropylene constitutes 100% by mass of the layer.

<Polypropylene Stretched Substrate>

The polypropylene stretched substrate contains polypropylene as a main component.

The polypropylene may be any of a homopolymer, a random copolymer, and a block copolymer, or may be a mixture of two or more selected from these. The polypropylene may be biomass-derived polypropylene and/or recycled polypropylene. The propylene homopolymer is a polymer composed only of propylene. The propylene random copolymer is a random copolymer of propylene and an $\alpha$-olefin or the like other than propylene. The propylene block copolymer is a copolymer having a polymer block composed of propylene and a polymer block composed of at least an $\alpha$-olefin or the like other than propylene. The polymer block composed of at least an $\alpha$-olefin or the like other than propylene may be a polymer block composed of propylene and an $\alpha$-olefin other than propylene.

The $\alpha$-olefin is, for example, an $\alpha$-olefin with 2 or more and 20 or less carbon atoms other than propylene. More specifically, the $\alpha$-olefin may be ethylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, or 6-methyl-1-heptene.

Among polypropylenes, a random copolymer is preferred from the perspective of transparency, a homopolymer is preferred when the rigidity and heat resistance of a packaging bag are regarded as important, and a block copolymer is preferred when the impact resistance of a packaging bag is regarded as important.

From the perspective of film formability and processability, the melt flow rate (MFR) of the polypropylene is preferably 0.1 g/10 minutes or more, more preferably 0.3 g/10 minutes or more, and is preferably 50 g/10 minutes or less, more preferably 30 g/10 minutes or less, for example, 0.1 g/10 minutes or more and 50 g/10 minutes or less. The MFR of the polypropylene is measured under conditions of a temperature of 230°C and a load of 2.16 kg in accordance with JIS K 7210-1: 2014, Method A.

The polypropylene content of the polypropylene stretched substrate is preferably more than 50% by mass, more preferably 60% or more by mass, still more preferably 70% or more by mass, still more preferably 80% or more by mass, particularly preferably 85% or more by mass, 90% or more by mass, or 95% or more by mass.

The polypropylene stretched substrate may contain a resin material other than polypropylene. The resin material is, for example, a polyolefin other than polypropylene, an acrylic resin, a vinyl resin, a cellulose resin, a polyamide, a polyester, or an ionomer resin. The polyolefin other than polypropylene may be polyethylene or the like.

The polypropylene stretched substrate may contain an additive agent. The additive agent is, for example, a cross-linker, an antioxidant, an anti-blocking agent, a lubricant, an ultraviolet absorber, a light stabilizer, a filler, a reinforcing agent, an antistatic agent, a pigment, or a modifying resin.

The polypropylene stretched substrate is a polypropylene substrate subjected to stretching treatment. A laminate including the polypropylene stretched substrate has, for example, high heat resistance, impact resistance, water resistance, and dimensional stability. Thus, a laminate including the polypropylene stretched substrate is suitable as, for example, a packaging material constituting a packaging bag to be subjected to retort treatment or boiling treatment.

The stretching treatment may be uniaxial stretching or biaxial stretching.

The stretch ratio in the case of stretching in the machine direction (the flow direction of the substrate, the MD direction) is preferably 2 times or more, more preferably 3 times or more, still more preferably 3.5 times or more, and is preferably 15 times or less, more preferably 8 times or less, still more preferably 7 times or less. The stretch ratio in the case of stretching in the width direction (the direction perpendicular to the MD direction, the TD direction) is preferably 4 times or more, more preferably 5 times or more, still more preferably 6 times or more, and is preferably 20 times or less, more preferably 17 times or less, still more preferably 15 times or less. The stretch ratio can be equal to or higher than a certain value to improve the strength and heat resistance of the substrate and improve the printability to the substrate. From the perspective of the fracture limit of the substrate, the stretch ratio is preferably equal to or lower than a certain value. The stretch ratio in the MD direction is preferably lower than the stretch ratio in the TD direction.

The polypropylene stretched substrate is, for example, a biaxially stretched substrate.

The polypropylene stretched substrate may be subjected to a surface treatment. This can improve, for example, the adhesion between the polypropylene stretched substrate and another layer. The surface treatment method is, for example, a physical treatment, such as a corona discharge treatment, an ozone treatment, a low-temperature plasma treatment using oxygen gas and/or nitrogen gas, or a glow discharge treatment, or a chemical treatment, such as an oxidation treatment using a chemical.

A layer with good adhesion may be provided on the surface of the polypropylene stretched substrate.

The polypropylene stretched substrate may have a monolayer structure or a multilayer structure.

The polypropylene stretched substrate preferably has a thickness of 10 $\mu$m or more, more preferably 15 $\mu$m or more, and preferably 100 $\mu$m or less, more preferably 50 $\mu$m or less, for example, 10 $\mu$m or more and 100 $\mu$m or less. A laminate including the stretched substrate with a thickness equal to or higher than the lower limit has, for example, high strength and heat resistance. A laminate including the stretched substrate with a thickness equal to or lower than the upper limit has, for example, high processability.

In the present description, the thickness of the substrate and each layer is measured as described below. A block in which a laminate is embedded in an embedding resin is prepared and is cut with a commercially available rotary microtome in a room temperature (25°C) environment to prepare a cross section of the laminate. The cross section is prepared by cutting in the thickness direction perpendicular to the main surface of the laminate. Finishing is performed with a diamond knife. The thickness of the substrate and each layer is calculated as an arithmetic mean of measurements taken at five points on the cross section observed with a scanning electron microscope (SEM, manufactured by Hitachi, Ltd., SU8000).

<Barrier Film>

The barrier film includes an inorganic oxide layer provided on one surface of a substrate (barrier substrate). The barrier film further includes a covering layer on the inorganic oxide layer. The barrier film may include a surface coating layer between the substrate (barrier substrate) and the inorganic oxide layer. The barrier film may be transparent.

(Polypropylene Stretched Substrate)

The substrate (barrier substrate) included in the barrier film may be the polypropylene stretched substrate described in the section of <Polypropylene Stretched Substrate>. The polypropylene stretched substrate of the first substrate and the polypropylene stretched substrate of the second substrate may be the same or different.

The polypropylene stretched substrate in the barrier film may be, for example, a stretched substrate of another embodiment including a polypropylene layer, an optional adhesive resin layer, and a surface resin layer described later in this order. In this embodiment, the barrier film includes the stretched substrate of the other embodiment, an inorganic oxide layer provided on a surface resin layer of the stretched substrate, and a covering layer. In this embodiment, the barrier film includes a polypropylene layer, an optional adhesive resin layer, a surface resin layer, an inorganic oxide layer, and a covering layer in this order. In one embodiment, the stretched substrate of the other embodiment is a coextruded stretched resin film. The coextruded stretched resin film can be produced, for example, by forming a laminated film using a T-die method, an inflation method, or the like, and then stretching the laminated film.

The stretching treatment of the stretched substrate of the other embodiment may be uniaxial stretching or biaxial stretching.

The stretch ratio in the case of stretching in the MD direction is preferably 2 times or more, more preferably 3 times or more, still more preferably 3.5 times or more, and is preferably 15 times or less, more preferably 8 times or less, still more preferably 7 times or less. The stretch ratio in the case of stretching in the TD direction is preferably 4 times or more, more preferably 5 times or more, still more preferably 6 times or more, and is preferably 20 times or less, more preferably 17 times or less, still more preferably 15 times or less. The stretch ratio in the MD direction is preferably lower than the stretch ratio in the TD direction.

(Surface Coating Layer)

The barrier film may include a surface coating layer containing a resin material with a polar group between the polypropylene stretched substrate and the inorganic oxide layer. Such a barrier film exhibits excellent adhesion to the inorganic oxide layer and also provides superior gas barrier properties. Such a barrier substrate includes the polypropylene stretched substrate, the surface coating layer, the inorganic oxide layer, and the covering layer in this order.

The polar group refers to a group with at least one heteroatom, for example, an ester group, an epoxy group, a hydroxy group, an amino group, an amide group, a urethane group, a carboxy group, a carbonyl group, a carboxylic anhydride group, a sulfo group, a thiol group, or a halogen group. Among these, a carboxy group, a carbonyl group, an ester group, a hydroxy group, an amino group, an amide group, and a urethane group are preferred, and a carboxy group, a hydroxy group, an amide group, and a urethane group are more preferred.

The resin material with a polar group is, for example, an ethylene-vinyl alcohol copolymer (EVOH), poly(vinyl alcohol) (PVA), a polyester, a polyethyleneimine, an acrylic resin with a hydroxy group, a polyamide, such as nylon 6, nylon 6,6, MXD nylon, or amorphous nylon, or a polyurethane. Among these, an ethylene-vinyl alcohol copolymer, poly(vinyl alcohol), an acrylic resin with a hydroxy group, a polyamide, and a polyurethane are more preferred.

The surface coating layer can be formed, for example, using an aqueous emulsion or a solvent emulsion. The aqueous emulsion is, for example, a polyamide emulsion, a polyethylene emulsion, or a polyurethane emulsion. The solvent emulsion is, for example, an acrylic resin emulsion or a polyester emulsion.

The amount of the resin material with a polar group in the surface coating layer is preferably 70% or more by mass, more preferably 80% or more by mass, still more preferably 90% or more by mass.

The surface coating layer may contain a resin material other than the resin material with a polar group.

The surface coating layer may contain the additive agent described above.

The ratio of the thickness of the surface coating layer to the total thickness of the polypropylene stretched substrate and the surface coating layer is preferably 0.08% or more, more preferably 0.2% or more, still more preferably 1% or more, and is preferably 20% or less, more preferably 15% or less, still more preferably 10% or less, still more preferably 5% or less, for example, 0.08% or more and 20% or less. The surface coating layer preferably has a thickness of 0.02 $\mu$m or more, more preferably 0.05 $\mu$m or more, still more preferably 0.1 $\mu$m or more, still more preferably 0.2 $\mu$m or more, and preferably 10 $\mu$m or less, more preferably 5 $\mu$m or less, for example, 0.02 $\mu$m or more and 10 $\mu$m or less. The ratio or the thickness equal to or higher than the lower limit can result in, for example, an inorganic oxide layer with improved adhesiveness, suppression of the deterioration of the gas barrier properties, and a laminate with improved laminate strength. The ratio or the thickness equal to or lower than the upper limit can result in, for example, a barrier film with improved processability and a laminate with improved recyclability.

For example, a polypropylene stretched substrate and a resin substrate having a surface coating layer can be produced by forming a film of polypropylene or a resin composition containing polypropylene by a T-die method, an inflation method, or the like to produce a polypropylene substrate, stretching the substrate, applying a coating liquid for forming a surface coating layer to the stretched substrate, and drying the coating liquid.

(Polypropylene Layer, Surface Resin Layer, and Adhesive Resin Layer)

In a stretched substrate of another embodiment, the polypropylene layer contains polypropylene as a main component. The details of polypropylene are as described above, and the description thereof is omitted in this section. The polypropylene content of the polypropylene layer is preferably more than 50% by mass, more preferably 60% or more by mass, still more preferably 70% or more by mass, still more preferably 80% or more by mass, particularly preferably 85% or more by mass, 90% or more by mass, or 95% or more by mass.

The polypropylene layer may contain the above resin material other than polypropylene.

The polypropylene layer may contain the additive agent described above.

The polypropylene layer may have a monolayer structure or a multilayer structure. The polypropylene layer preferably has a thickness of 10 $\mu$m or more, more preferably 15 $\mu$m or more, and preferably 100 $\mu$m or less, more preferably 50 $\mu$m or less, for example, 10 $\mu$m or more and 100 $\mu$m or less.

The surface resin layer contains a resin material with a melting point of 180°C or more (hereinafter also referred to as a "high-melting-point resin material"). A surface resin layer containing a high-melting-point resin material can be provided between the polypropylene layer and the inorganic oxide layer, for example, to improve the adhesiveness of the inorganic oxide layer formed on the surface resin layer and suppress the deterioration of the gas barrier properties.

Furthermore, a packaging bag produced using a laminate including the surface resin layer has high laminate strength.

In one embodiment, the surface resin layer may be provided on the polypropylene layer. That is, the surface resin layer may be adjacent to the polypropylene layer.

In one embodiment, when a stretched substrate of another embodiment includes an adhesive resin layer between the polypropylene layer and the surface resin layer, the adhesive resin layer may be provided on the polypropylene layer, and the surface resin layer may be provided on the adhesive resin layer. That is, the adhesive resin layer may be adjacent to the polypropylene layer, and the surface resin layer may be adjacent to the adhesive resin layer.

The high-melting-point resin material preferably has a melting point of 185°C or more, more preferably 190°C or more, still more preferably 205°C or more. A melting point equal to or higher than the lower limit can result in, for example, an inorganic oxide layer with improved adhesiveness, suppression of the deterioration of the gas barrier properties, and a laminate with improved laminate strength. The high-melting-point resin material preferably has a melting point of 265°C or less, more preferably 260°C or less, still more preferably 250°C or less. This can improve, for example, the film formability of the stretched substrate.

In the present description, the melting point of a high-melting-point resin material or the like is measured in accordance with JIS K 7121: 2012 (Testing methods for transition temperatures of plastics). More specifically, a melting peak temperature as a melting point is determined by measuring a DSC curve at a heating rate of 10°C/min using a differential scanning calorimetry (DSC) apparatus.

It is preferable that the high-melting-point resin material in the surface resin layer have a melting point TA, the polypropylene in the polypropylene layer have a melting point TB, and the difference between the melting point TA and the melting point TB be 20°C or more. The difference between the melting point TA and the melting point TB is preferably 80°C or less, more preferably 60°C or less.

A difference between the melting point TA and the melting point TB equal to or higher than the lower limit can result in further improved adhesion between the surface resin layer and the inorganic oxide layer and further improved gas barrier properties. This can also result in a packaging bag with further improved laminate strength.

A difference between the melting point TA and the melting point TB equal to or lower than the upper limit can result in a polypropylene stretched substrate with further improved film formability.

The high-melting-point resin material preferably has a polar group. The polar group refers to a group with at least one heteroatom, for example, an ester group, an epoxy group, a hydroxy group, an amino group, an amide group, a urethane group, a carboxy group, a carbonyl group, a carboxylic anhydride group, a sulfo group, a thiol group, or a halogen group. Among these, a hydroxy group, an ester group, an amino group, an amide group, a carboxy group, and a carbonyl group are preferred, and an amide group is more preferred.

The high-melting-point resin material only needs to have a melting point of 180°C or more and is, for example, a polyolefin, a vinyl resin, an acrylic resin, a polyamide, a polyimide, a polyester, a cellulose resin, or an ionomer resin. For example, a resin material with a melting point of 180°C or more and with a polar group is preferred, and an ethylene-vinyl alcohol copolymer, poly(vinyl alcohol), a polyester, or a polyamide, such as nylon 6, nylon 6,6, MXD nylon, or amorphous nylon, is more preferred.

Such a resin material can be used to significantly improve the adhesiveness of the inorganic oxide layer formed on the surface resin layer and effectively suppress the deterioration of the gas barrier properties.

In one embodiment, the high-melting-point resin material is preferably a polyamide. A polyamide can be used as the high-melting-point resin material to the deterioration of the gas barrier properties even after the laminate is bent and to improve the heat resistance of the laminate. Furthermore, even after the laminate is subjected to retort treatment and boiling treatment described later, the deterioration of the gas barrier properties can be suppressed. The high-melting-point resin material is more preferably nylon 6.

The surface resin layer preferably has a high-melting-point resin material content of 70% or more by mass, more preferably 80% or more by mass, still more preferably 90% or more by mass.

The surface resin layer may contain the resin material other than the high-melting-point resin material.

The surface resin layer may contain the additive agent.

The surface resin layer may be subjected to the surface treatment described above.

The ratio of the thickness of the surface resin layer to the total thickness of a stretched substrate of another embodiment including the polypropylene layer and the surface resin layer is preferably 1% or more, more preferably 1.5% or more, and is preferably 10% or less, more preferably 5% or less, for example, 1% or more and 10% or less. The surface resin layer preferably has a thickness of 0.1 μm or more, more preferably 0.2 μm or more, and preferably 5 μm or less, more preferably 4 μm or less, for example, 0.1 μm or more and 5 μm or less. The ratio or the thickness equal to or higher than the lower limit can result in, for example, an inorganic oxide layer with improved adhesiveness, suppression of the deterioration of the gas barrier properties, and a laminate with improved laminate strength. The ratio or the thickness equal to or lower than the upper limit can result in, for example, a stretched substrate of another embodiment with improved film formability and processability and a laminate with improved recyclability.

A stretched substrate of another embodiment may include an adhesive resin layer between the polypropylene layer and the surface resin layer. This can improve the adhesion between the layers. The adhesive resin layer has a thickness of, for example, 1 μm or more and 15 μm or less. The adhesive resin layer with a thickness equal to or higher than the lower limit can further improve the adhesion between the polypropylene layer and the surface resin layer. The adhesive resin layer with a thickness equal to or lower than the upper limit can improve the processability of the barrier substrate.

The adhesive resin layer can be formed of, for example, an adhesive resin. The adhesive resin is, for example, a polyether, a polyester, a polyurethane, a silicone resin, an epoxy resin, a vinyl resin, a phenolic resin, a polyolefin, or an acid-modified product of a polyolefin. Among these, from the perspective of the recyclability of the laminate, a polyolefin and an acid-modified product thereof are preferred, and polypropylene and an acid-modified product thereof are more preferred. Polypropylene used for the adhesive resin layer may be a commercial product, for example, Admer series manufactured by Mitsui Chemicals, Inc.

(Inorganic Oxide Layer)

The barrier film includes an inorganic oxide layer on one surface of a barrier substrate. The inorganic oxide layer contains one or two or more inorganic oxides and is, for example, a vapor-deposited film of an inorganic oxide. A laminate including the barrier film has good gas barrier properties, more specifically, good oxygen barrier properties and water vapor barrier properties. A packaging bag produced using such a laminate can suppress the oxidative degradation of the contents filled in the packaging bag and can reduce the mass loss of the contents. The barrier film may include, for example, an inorganic oxide layer on a surface coating layer or may include an inorganic oxide layer on a surface resin layer.

The inorganic oxide is, for example, aluminum oxide (alumina), silicon oxide (silica), magnesium oxide, calcium oxide, zirconium oxide, titanium oxide, boron oxide, hafnium oxide, barium oxide, or silicon oxycarbide (carbon-containing silicon oxide). Among these, silica, silicon oxycarbide, and alumina are preferred.

In one embodiment, the inorganic oxide is more preferably silica because an aging treatment after the formation of the inorganic oxide layer is not required. In one embodiment, the inorganic oxide is more preferably carbon-containing silicon oxide because the deterioration of the gas barrier properties can be suppressed even when the laminate is bent.

The inorganic oxide layer preferably has a thickness of 1 nm or more, more preferably 5 nm or more, still more preferably 10 nm or more, and preferably 150 nm or less, more preferably 60 nm or less, still more preferably 40 nm or less, for example, 1 nm or more and 150 nm or less. A laminate including an inorganic oxide layer with a thickness equal to or higher than the lower limit has, for example, good oxygen barrier properties and water vapor barrier properties. For example, a laminate including an inorganic oxide layer with a thickness equal to or lower than the upper limit can suppress the occurrence of a crack in the inorganic oxide layer and has high recyclability.

The surface of the inorganic oxide layer may be subjected to the surface treatment described above.

A method for forming an inorganic oxide layer, particularly an inorganic oxide deposited film, is, for example, a physical vapor deposition method (PVD method), such as a vacuum deposition method, a sputtering method, or an ion plating method, and a chemical vapor deposition method (CVD method), such as a plasma chemical vapor deposition method, a thermal chemical vapor deposition method, or a photochemical vapor deposition method.

The inorganic oxide layer may be a single layer formed by a single vapor deposition step or multiple layers formed by a plurality of vapor deposition steps. When the inorganic oxide layer has multiple layers, each layer may be composed of the same inorganic oxide or different inorganic oxides. Each layer may be formed by the same method or different methods.

The inorganic oxide layer is preferably a vapor-deposited film formed by a CVD method, more preferably a carbon-containing silicon oxide deposited film formed by a CVD method. A laminate including such an inorganic oxide layer has, for example, high bending resistance.

The carbon-containing silicon oxide deposited film contains silicon, oxygen, and carbon.

In one embodiment of the carbon-containing silicon oxide deposited film, the carbon content C is preferably 3% or more, more preferably 5% or more, still more preferably 10% or more, and is preferably 50% or less, more preferably 40% or less, still more preferably 35% or less, for example, 3% or more and 50% or less, relative to the total (100%) of the three elements of silicon, oxygen, and carbon. A carbon content C in such a range can result in, for example, a laminate with less deterioration of the gas barrier properties even when bent.

In the present description, the ratio of each element is on a molar basis.

In one embodiment of the carbon-containing silicon oxide deposited film, the silicon content Si is preferably 1% or more, more preferably 3% or more, still more preferably 8% or more, and is preferably 45% or less, more preferably 38% or less, still more preferably 33% or less, for example, 1% or more and 45% or less, relative to the total (100%) of the three elements of silicon, oxygen, and carbon. The oxygen content O is preferably 10% or more, more preferably 20% or more, still more preferably 25% or more, and is preferably 70% or less, more preferably 65% or less, still more preferably 60% or less, for example, 10% or more and 70% or less, relative to the total (100%) of the three elements of silicon, oxygen, and carbon. A silicon content Si and an oxygen content O in such a range can result in, for example, a laminate with much less deterioration of the gas barrier properties even when bent.

In one embodiment of the carbon-containing silicon oxide deposited film, the oxygen content O is preferably higher than the carbon content C, and the silicon content Si is preferably lower than the carbon content C. The oxygen content O is preferably higher than the silicon content Si; that is, the oxygen content O, the carbon content C, and the silicon content Si preferably decrease in this order. This can further suppress, for example, the deterioration of the gas barrier properties even when the laminate is bent.

The carbon content C, the silicon content Si, and the oxygen content O of the carbon-containing silicon oxide deposited film are measured by X-ray photoelectron spectroscopy (XPS) using narrow scan analysis under the following measurement conditions.

(Measurement Conditions)

Apparatus: "ESCA-3400" (manufactured by Kratos)

[1] Spectrum Measurement Conditions

Incident X-ray: MgKα (monochromated X-ray, hv = 1253.6 eV)

X-ray output: 150 W (10 kV x 15 mA)

X-ray scan area (measurement region): approximately 6 mmφ

Photoelectron acceptance angle: 90 degrees

[2] Ion Sputtering Conditions

Ionic species: Ar+

Accelerating voltage: 0.2 (kV)

Emission current: 20 (mA)

Etch range: 10 mmφ

Ion sputtering time: 30 seconds to measure a spectrum

(Covering Layer)

The barrier film further includes a covering layer on the inorganic oxide layer provided on one surface of the barrier substrate. That is, the barrier film further includes a covering layer on the surface of the inorganic oxide layer opposite the surface facing the polypropylene stretched substrate. A laminate including such a barrier film has, for example, good oxygen barrier properties and water vapor barrier properties.

The covering layer included in the barrier film is preferably close to the first adhesive layer or the second adhesive layer, more preferably adjacent to the first adhesive layer or the second adhesive layer. The phrase "the covering layer is close to the adhesive layer (the first adhesive layer or the second adhesive layer)", as used herein, means that an optional layer with a thickness that does not impair the advantages of the present invention is located between the covering layer and the adhesive layer, and the covering layer and the adhesive layer are disposed so as to face each other with the optional layer interposed therebetween. The phrase "the covering layer is adjacent to the adhesive layer", as used herein, means that the covering layer and the adhesive layer are disposed so as to be in contact with each other without another layer being present between the covering layer and the adhesive layer.

In one embodiment, the covering layer contains a resin component. The resin component is, for example, a polyolefin, such as polyethylene, polypropylene, polybutene, or polymethylpentene, a vinyl resin, an acrylic resin, a polyester, a urethane resin, a melamine resin, or an epoxy resin. The resin component content of the covering layer is preferably more than 50% by mass, more preferably 75% or more by mass, and is preferably 95% or less by mass, more preferably 90% or less by mass, for example, more than 50% by mass and 95% or less by mass.

The covering layer may contain the additive agent described above.

The covering layer preferably has a thickness of 0.01 $\mu$m or more, more preferably 0.05 $\mu$m or more, still more preferably 0.1 $\mu$m or more, and preferably 5 $\mu$m or less, more preferably 3 $\mu$m or less, still more preferably 1 $\mu$m or less, for example, 0.01 $\mu$m or more and 5 $\mu$m or less. Such a covering layer has, for example, high scratch resistance.

The covering layer can be formed, for example, by applying a coating liquid for a covering layer to the surface of the inorganic oxide layer and drying the coating liquid. The coating liquid for a covering layer can be prepared, for example, by mixing the above-described resin component, an additive agent as required, and a solvent. Details of these components are as described above. A method for applying the coating liquid for a covering layer may be a known coating method. A method for drying the applied coating liquid for a covering layer is, for example, a method of applying heat, such as hot-air drying, hot-roll drying, or infrared irradiation. The drying temperature may be 50°C or more and may be 150°C or less.

In one embodiment, the covering layer may be a barrier coating layer containing a gas barrier resin. The gas barrier resin is, for example, an ethylene-vinyl alcohol copolymer, poly(vinyl alcohol), a polyacrylonitrile, a polyester, a polyamide, such as nylon 6, nylon 6,6, or poly(m-xylylene adipamide), a polyurethane, or an acrylic resin. Among these, poly(vinyl alcohol) is preferred from the perspective of oxygen barrier properties and water vapor barrier properties.

Furthermore, poly(vinyl alcohol) in the barrier coating layer can effectively prevent the occurrence of a crack in the inorganic oxide layer.

The gas barrier resin content of the barrier coating layer is preferably 50% or more by mass, more preferably 60% or more by mass, still more preferably 70% or more by mass, still more preferably 75% or more by mass, and is preferably 95% or less by mass, more preferably 90% or less by mass, for example, 50% or more by mass and 90% or less by mass. Such a barrier coating layer has, for example, good gas barrier properties.

The barrier coating layer may contain the additive agent described above.

The barrier coating layer containing the gas barrier resin preferably has a thickness of 0.01 $\mu$m or more, more preferably 0.1 $\mu$m or more, and preferably 10 $\mu$m or less, more preferably 5 $\mu$m or less, for example, 0.01 $\mu$m or more and 10 $\mu$m or less. A barrier substrate including the barrier coating layer with a thickness equal to or higher than the lower limit has, for example, good gas barrier properties. A barrier film including the barrier coating layer with a thickness equal to or lower than the upper limit can improve, for example, the processability and recyclability of the laminate.

Furthermore, the barrier coating layer with a thickness in the above range does not impair the recyclability even when the gas barrier resin is a resin material different from polypropylene.

The barrier coating layer can be formed, for example, by dissolving or dispersing a material, such as a gas barrier resin, in water or an appropriate organic solvent, applying the resulting coating liquid to the surface of the inorganic oxide layer, and drying the coating liquid. The barrier coating layer can also be formed, for example, by applying and drying a commercially available barrier coating agent.

In one embodiment, the covering layer may be a gas barrier coating film formed by subjecting a composition containing a metal alkoxide and a water-soluble polymer to a polycondensation treatment by a sol-gel method in the presence of a sol-gel method catalyst, water, an organic solvent, and the like. A barrier film including a gas barrier coating film on an inorganic oxide layer has, for example, good gas barrier properties. The gas barrier coating film contains a hydrolytic polycondensate produced by hydrolysis and polycondensation of the metal alkoxide or the like by a sol-gel method. Such a gas barrier coating film on the inorganic oxide layer can effectively suppress, for example, the occurrence of a crack in the inorganic oxide layer.

The metal alkoxide is represented, for example, by the formula (A).

$$R^1_n M(OR^2)_m \qquad (A)$$

In the formula (A), $R^1$ and $R^2$ each independently denote an organic group with 1 or more and 8 or less carbon atoms, M denotes a metal atom, n denotes an integer of 0 or more, m denotes an integer of 1 or more, and n + m denotes the valence of M. The organic group in $R^1$ and $R^2$ is, for example, an alkyl group with 1 or more and 8 or less carbon atoms, such as a methyl group, an ethyl group, a n-propyl group, an isopropyl group, a n-butyl group, an isobutyl group, a sec-butyl group, a t-butyl group, a n-hexyl group, or a n-octyl group. The metal atom M is, for example, silicon, zirconium, titanium, or aluminum. The metal alkoxide is, for example, an alkoxysilane, such as tetramethoxysilane, tetraethoxysilane, tetrapropoxysilane, or tetrabutoxysilane.

The water-soluble polymer is, for example, a polymer with a hydroxy group, such as poly(vinyl alcohol) or an ethylene-vinyl alcohol copolymer. Depending on desired physical properties, such as oxygen barrier properties, water vapor barrier properties, water resistance, or weather resistance, poly(vinyl alcohol) and an ethylene-vinyl alcohol copolymer may be used alone or in combination, or a gas barrier coating film formed using poly(vinyl alcohol) and a gas barrier coating film formed using an ethylene-vinyl alcohol copolymer may be laminated. The amount of the water-soluble polymer to be used is preferably 3 parts by mass or more, more preferably 5 parts by mass or more, and preferably 500 parts by mass or less, per 100 parts by mass of the metal alkoxide. The gas barrier coating film with a water-soluble polymer content equal to or higher than the lower limit can further improve the oxygen barrier properties and water vapor barrier properties of the laminate. The gas barrier coating film with a water-soluble polymer content equal to or lower than the upper limit can improve the film formability of the gas barrier coating film.

The metal alkoxide may be used together with a silane coupling agent. The silane coupling agent can be a known organoalkoxysilane with an organic reactive group, preferably an organoalkoxysilane with an epoxy group, for example, γ-glycidoxypropyltrimethoxysilane, γ-glycidoxypropylmethyldiethoxysilane, or β-(3,4-epoxycyclohexyl)ethyltrimethoxysilane. The amount of the silane coupling agent to be used is preferably 1 part by mass or more and 20 parts by mass or less per 100 parts by mass of the metal alkoxide.

In the gas barrier coating film, the ratio of the metal alkoxide to the water-soluble polymer (metal alkoxide/water-soluble polymer) is preferably 4.5 or less, more preferably 3.5 or less, and is preferably 1.0 or more, more preferably 1.7 or more, for example, 1.0 or more and 4.5 or less, on a mass basis.

When the ratio of the metal alkoxide to the water-soluble polymer is equal to or lower than the upper limit, it is possible to suppress the deterioration of the gas barrier properties even after the laminate is bent.

When the ratio of the metal alkoxide to the water-soluble polymer is equal to or higher than the lower limit, the heat resistance of the laminate can be improved. This can also suppress the deterioration of the gas barrier properties even after the laminate is subjected to retort treatment and boiling treatment.

The above ratio is a solid content ratio.

The ratio of silicon atoms to carbon atoms (Si/C) on the surface of the gas barrier coating film as measured by X-ray photoelectron spectroscopy (XPS) is preferably 1.60 or less, more preferably 1.35 or less, and is preferably 0.50 or more, more preferably 0.90 or more.

When the ratio of silicon atoms to carbon atoms is equal to or lower than the upper limit, it is possible to suppress the deterioration of the gas barrier properties even after the laminate is bent.

When the ratio of silicon atoms to carbon atoms is equal to or higher than the lower limit, the heat resistance of the laminate can be improved. This can also suppress the deterioration of the gas barrier properties even after the laminate is subjected to retort treatment and boiling treatment.

A ratio of silicon atoms to carbon atoms in such a range can be achieved by appropriately adjusting the ratio of the metal alkoxide to the water-soluble polymer.

In the present description, the ratio of silicon atoms to carbon atoms is on a molar basis.

The ratio of silicon atoms to carbon atoms in X-ray photoelectron spectroscopy (XPS) can be measured by narrow scan analysis under the following measurement conditions.

(Measurement Conditions)

Apparatus: "ESCA-3400" (manufactured by Kratos)

[1] Spectrum Measurement Conditions

Incident X-ray: MgKα (monochromated X-ray, hv = 1253.6 eV)

X-ray output: 150 W (10 kV x 15 mA)

X-ray scan area (measurement region): approximately 6 mmφ

Photoelectron acceptance angle: 90 degrees

[2] Ion Sputtering Conditions

Ionic species: $Ar^+$

Accelerating voltage: 0.2 (kV)

Emission electric current: 20 (mA)

Etch range: 10 mmφ

Ion sputtering time: 30 seconds + 30 seconds + 60 seconds (120 seconds in total) to measure a spectrum

The gas barrier composition may preferably contain water in an amount of 0.1 mol or more, more preferably 0.5 mol or more, still more preferably 0.8 mol or more, and preferably 100 mol or less, more preferably 60 mol or less, still more preferably 2 mol or less, per mole of the metal alkoxide. A water content equal to or higher than the lower limit can result in, for example, a laminate with improved oxygen barrier properties and water vapor barrier properties. A water content equal to or lower than the upper limit can result in, for example, a rapid hydrolysis reaction.

The gas barrier composition may contain an organic solvent. The organic solvent is, for example, methyl alcohol, ethyl alcohol, n-propyl alcohol, isopropyl alcohol, or n-butyl alcohol.

The sol-gel method catalyst is preferably an acid or an amine compound.

The acid is, for example, a mineral acid, such as sulfuric acid, hydrochloric acid, or nitric acid, or an organic acid, such as acetic acid or tartaric acid. The amount of the acid to be used is preferably 0.001 mol or more and 0.05 mol or less per total mole of the metal alkoxide and the alkoxide moiety (for example, silicate moiety) of the silane coupling agent. When the amount of the acid to be used is equal to or higher than the lower limit, the catalytic effect can be improved. When the amount of the acid to be used is equal to or lower than the upper limit, a gas barrier coating film with a uniform thickness can be formed.

The amine compound is preferably a tertiary amine that is substantially insoluble in water and soluble in an organic solvent, for example, N,N-dimethylbenzylamine, tripropylamine, tributylamine, or tripentylamine. Among these, N,N-dimethylbenzylamine is preferred.

The amount of the amine compound to be used is preferably 0.01 parts by mass or more, more preferably 0.03 parts by mass or more, and is preferably 1.0 part by mass or less, more preferably 0.3 parts by mass or less, per 100 parts by mass of the metal alkoxide and the silane coupling agent in total. When the amount of the amine compound to be used is equal to or higher than the lower limit, the catalytic effect thereof can be improved. When the amount of the amine compound to be used is equal to or lower than the upper limit, a gas barrier coating film with a uniform thickness can be formed.

A method for applying the gas barrier composition is, for example, roll coating with a gravure roll coater or the like, spray coating, spin coating, dipping, brushing, bar coating, or application means, such as an applicator.

One embodiment of a method for forming a gas barrier coating film will be described below

A gas barrier composition is prepared by mixing a metal alkoxide, a water-soluble polymer, a sol-gel method catalyst, water, an organic solvent, a silane coupling agent as required, and the like. A polycondensation reaction proceeds gradually in the composition. The composition is applied to the inorganic oxide layer and is dried in the usual manner. The drying further promotes the polycondensation of the metal alkoxide and the water-soluble polymer (and the silane coupling agent when the composition contains the silane coupling agent), thereby forming a layer of a composite polymer. This operation may be repeated to stack a plurality of composite polymer layers. For example, the applied composition is preferably heated at a temperature of 20°C or more, more preferably 50°C or more, still more preferably 70°C or more, and preferably 250°C or less, more preferably 220°C or less, still more preferably 150°C or less, still more preferably 120°C or less, particularly preferably 100°C or less, for 1 second or more and 10 minutes or less. Thus, a gas barrier coating film can be formed.

The gas barrier coating film preferably has a thickness of 0.01 $\mu$m or more, more preferably 0.1 $\mu$m or more, and preferably 100 $\mu$m or less, more preferably 10 $\mu$m or less, still more preferably 2 $\mu$m or less, still more preferably 1 $\mu$m or less, particularly preferably 0.5 $\mu$m or less, for example, 0.01 $\mu$m or more and 100 $\mu$m or less. For example, this can suppress the deterioration of the gas barrier properties, suppress the occurrence of a crack in the inorganic oxide layer, and improve the recyclability of a packaging bag.

<Print Layer>

A laminate according to the present disclosure may have a print layer on the surface of a substrate, such as a first substrate or a second substrate, or between arbitrary layers. An image formed on the print layer is, but not limited to, a character, a pattern, a symbol, a combination thereof, or the like. The print layer may be formed using a biomass-derived ink. This can further reduce the environmental load.

A method for forming a print layer is, for example, a known printing method, such as a gravure printing method, an offset printing method, or a flexographic printing method. Among these, the flexographic printing method is preferred from the perspective of environmental load reduction.

The print layer has a thickness of, for example, 0.5 $\mu$m or more and 3 $\mu$m or less.

<Sealant Layer>

A laminate according to the present disclosure includes a sealant layer.

The sealant layer contains polypropylene as a main component. The sealant layer contains a resin material of the same type as the polypropylene stretched substrate, that is, polypropylene as a main component. Thus, the laminate can be made of a single material. This eliminates the need to separate the substrate and the sealant layer of a used packaging bag collected and can improve the recyclability of the packaging bag.

The sealant layer preferably has a polypropylene content of more than 50% by mass, more preferably 60% or more by mass, still more preferably 70% or more by mass, still more preferably 80% or more by mass, particularly preferably 85% or more by mass, 90% or more by mass, or 95% or more by mass. A laminate including such a sealant layer has, for example, high recyclability.

The polypropylene is, for example, a propylene homopolymer, a propylene random copolymer, such as a propylene-$\alpha$-olefin random copolymer, or a propylene block copolymer, such as a propylene-$\alpha$-olefin block copolymer. The $\alpha$-olefin is described in detail above. From the perspective of heat sealability, the polypropylene has a density of, for example, 0.88 g/cm3 or more and 0.92 g/cm3 or less. The density is measured in accordance with JIS K 7112: 1999, Method D (density-gradient tube method, 23°C). From the perspective of environmental load reduction, biomass-derived polypropylene and/or recycled polypropylene may be used.

The sealant layer may contain the additive agent described above.

The sealant layer may have a monolayer structure or a multilayer structure.

The sealant layer preferably has a thickness of 10 $\mu$m or more, more preferably 20 $\mu$m or more, and preferably 200 $\mu$m or less, more preferably 150 $\mu$m or less, for example, 10 $\mu$m or more and 200 $\mu$m or less. A laminate including a sealant layer with a thickness equal to or higher than the lower limit has, for example, high seal strength. A laminate including a sealant layer with a thickness equal to or lower than the upper limit has, for example, high processability. When a pouch (in particular, a retort pouch) is produced from a laminate, the sealant layer preferably has a thickness of 30 $\mu$m or more and 100 $\mu$m or less.

The sealant layer is preferably an unstretched polypropylene film from the perspective of heat sealability, and the unstretched polypropylene film can be produced, for example, by a casting method, a T-die method, an inflation method, or the like.

The sealant layer may be subjected to the surface treatment described above.

<Adhesive Layer>

In one embodiment, a laminate according to the present disclosure includes an adhesive layer between a barrier film and a sealant layer. In one embodiment, a laminate according to the present disclosure includes a first adhesive layer between a first substrate and a second substrate. In one embodiment, a laminate according to the present disclosure includes a second adhesive layer between a second substrate and a sealant layer. Such a laminate has, for example, high laminate strength between the barrier film and the sealant layer, between the first substrate and the second substrate, and between the second substrate and the sealant layer.

(First Adhesive Layer)

The modulus of elasticity of a cross section of a first adhesive layer as measured with an atomic force microscope (AFM) is 100.0 MPa or less, preferably 50.0 MPa or less, more preferably 40.0 MPa or less, still more preferably 35.0 MPa or less, particularly preferably 30.0 MPa or less. A packaging bag produced using a laminate including a first adhesive layer with a modulus of elasticity equal to or lower than the upper limit may experience less deterioration of the gas barrier properties (for example, oxygen barrier properties and water vapor barrier properties, particularly oxygen barrier properties) even after heat treatment, such as retort treatment, and tends to have a good appearance. When a print layer is provided on a surface of the first substrate facing the first adhesive layer, the first adhesive layer with a modulus of elasticity equal to or lower than the upper limit tends to have high adhesiveness to the print layer.

The modulus of elasticity of a cross section of the first adhesive layer as measured with an AFM is preferably 5.0 MPa or more, more preferably 10.0 MPa or more, still more preferably 15.0 MPa or more, still more preferably 16.0 MPa or more, particularly preferably 18.0 MPa or more. A packaging bag produced using a laminate including a first adhesive layer with a modulus of elasticity equal to or higher than the lower limit may experience less deterioration of the gas barrier properties even after heat treatment, such as retort treatment, and tends to have a good appearance.

The first adhesive layer has a modulus of elasticity of, for example, 5.0 MPa or more and 100.0 MPa or less.

The details of the measurement conditions of the modulus of elasticity using an AFM are described in the section of Examples.

The first adhesive layer with the above modulus of elasticity can be formed, for example, by using a solvent-based adhesive described later and appropriately changing the type and molecular weight of a polymer component contained in a main agent described later, the type of curing agent, the mole ratio (NCO/OH), and aging conditions.

The first adhesive layer preferably has a thickness of 1.0 $\mu$m or more, more preferably 1.5 $\mu$m or more, still more preferably 2.0 $\mu$m or more, particularly preferably 2.5 $\mu$m or more, and preferably 10.0 $\mu$m or less, more preferably 8.0 $\mu$m or less, still more preferably 6.0 $\mu$m or less, particularly preferably 5.0 $\mu$m or less, for example, 1.0 $\mu$m or more and 10.0 $\mu$m or less. When a print layer is provided on a surface of the first substrate facing the first adhesive layer, a first adhesive layer with a thickness equal to or higher than the lower limit can appropriately cover a difference in the level caused by the print layer, and a packaging bag with a good appearance tends to be produced. A laminate including a first adhesive layer with a thickness equal to or higher than the lower limit tends to have high laminate strength even after heat treatment.

The thickness of the first adhesive layer relative to the thickness of the entire laminate is preferably 1.0% or more, more preferably 1.5% or more, still more preferably 2.0% or more, particularly preferably 2.5% or more, and is preferably 10.0% or less, more preferably 8.0% or less, still more preferably 6.0% or less, particularly preferably 5.0% or less, for example, 1.0% or more and 10.0% or less.

In one embodiment (A1), the modulus of elasticity of a cross section of the first adhesive layer as measured with an AFM is preferably 35.0 MPa or less, more preferably 33.0 MPa or less, still more preferably 30.0 MPa or less, still more preferably 28.0 MPa or less, particularly preferably 26.0 MPa or less, and is preferably 5.0 MPa or more, more preferably 10.0 MPa or more, still more preferably 15.0 MPa or more, still more preferably 16.0 MPa or more, particularly preferably 18.0 MPa or more, for example, 5.0 MPa or more and 35.0 MPa or less. A packaging bag produced using a laminate including a first adhesive layer with such a modulus of elasticity tends to be able to suppress the deterioration of the gas barrier properties even after heat treatment, such as retort treatment, because the first adhesive layer can have a buffering effect when the packaging bag shrinks by heat treatment. The modulus of elasticity of the first adhesive layer can be formed, for example, by using a solvent-based adhesive described later and appropriately changing the type and molecular weight of a polymer component contained in a main agent described later, the type of curing agent, the mole ratio (NCO/OH), and aging conditions. Here, since the viscosity of the solvent-based adhesive can be easily adjusted with a solvent, the modulus of elasticity can be suppressed to be low when used as the first adhesive layer.

When the first adhesive layer has the modulus of elasticity of the embodiment (A1), in one embodiment, the first adhesive layer preferably has a thickness of 1.0 $\mu$m or more, more preferably 1.5 $\mu$m or more, still more preferably 2.0 $\mu$m or more, particularly preferably 2.5 $\mu$m or more, and preferably 10.0 $\mu$m or less, more preferably 8.0 $\mu$m or less, still more preferably 6.0 $\mu$m or less, particularly preferably 5.0 $\mu$m or less, for example, 1.0 $\mu$m or more and 10.0 $\mu$m or less. In this embodiment, the thickness of the first adhesive layer relative to the thickness of the entire laminate is preferably 1.0% or more, more preferably 1.5% or more, still more preferably 2.0% or more, particularly preferably 2.5% or more, and is preferably 10.0% or less, more preferably 8.0% or less, still more preferably 6.0% or less, particularly preferably 4.0% or less.

In one embodiment (B1), the modulus of elasticity of a cross section of the first adhesive layer as measured with an AFM is 100 MPa or less, more preferably 90 MPa or less, still more preferably 80.0 MPa or less, 70.0 MPa or less, 60.0 MPa or less, or 50.0 MPa or less, and is preferably more than 35.0 MPa, for example, more than 35.0 MPa and 100 MPa or less. A packaging bag produced using a laminate including the first adhesive layer with such a modulus of elasticity can be suitably laminated with a flexible film and tends to have high cuttability without stretching of the first adhesive layer. The modulus of elasticity of the first adhesive layer can be formed, for example, by using a solvent-free adhesive described later and appropriately changing the type and molecular weight of a polymer component contained in a main agent described later, the type of curing agent, the mole ratio (NCO/OH), and aging conditions. Here, the solvent-free adhesive tends to have an increased number of cross-linking sites after aging and become hard because the polymer component contained in the main agent has a low molecular weight so as to reduce the viscosity only by heating at the time of processing and the amount of the curing agent is large. Thus, the solvent-free adhesive can increase the modulus of elasticity as compared with the solvent-based adhesive.

When the first adhesive layer has the modulus of elasticity of the embodiment (B1), in one embodiment, the first adhesive layer preferably has a thickness of 3.0 $\mu$m or less, more preferably 2.5 $\mu$m or less, still more preferably 2.0 $\mu$m or less, still more preferably 1.5 $\mu$m or less, and preferably 0.5 $\mu$m or more, more preferably 0.8 $\mu$m or more, still more preferably 1.0 $\mu$m or more, for example, 0.5 $\mu$m or more and 3.0 $\mu$m or less. In this embodiment, the thickness of the first adhesive layer relative to the thickness of the entire laminate is preferably 0.5% or more, more preferably 0.8% or more, still more preferably 1.0% or more, and is preferably 3.0% or less, more preferably 2.5% or less, still more preferably 2.0% or less, still more preferably 1.5% or less, for example, 0.5% or more and 3.0% or less.

(Second Adhesive Layer)

The second adhesive layer preferably has a thickness of 0.5 $\mu$m or more, more preferably 0.8 $\mu$m or more, still more preferably 1.0 $\mu$m or more, particularly preferably 3.0 $\mu$m or more, and preferably 10.0 $\mu$m or less, more preferably 8.0 $\mu$m or less, still more preferably 6.0 $\mu$m or less, particularly preferably 5.0 $\mu$m or less, for example, 0.5 $\mu$m or more and

10.0 μm or less. In a laminate including a second adhesive layer with a thickness equal to or higher than the lower limit, the elongation of the sealant layer can be suppressed at the time of cutting.

In one embodiment (A2), the modulus of elasticity of a cross section of the second adhesive layer as measured with an AFM is preferably 35.0 MPa or less, more preferably 33.0 MPa or less, still more preferably 30.0 MPa or less, still more preferably 28.0 MPa or less, particularly preferably 26.0 MPa or less, and is preferably 5.0 MPa or more, more preferably 10.0 MPa or more, still more preferably 15.0 MPa or more, still more preferably 16.0 MPa or more, particularly preferably 18.0 MPa or more, for example, 5.0 MPa or more and 35.0 MPa or less. A packaging bag produced using a laminate including a second adhesive layer with such a modulus of elasticity tends to experience less deterioration of the gas barrier properties even after heat treatment, such as retort treatment. The second adhesive layer with such a modulus of elasticity can be formed, for example, by using a solvent-based adhesive described later and appropriately changing the type and molecular weight of a polymer component contained in a main agent described later, the type of curing agent, the mole ratio (NCO/OH), and aging conditions.

When the second adhesive layer has the modulus of elasticity of the embodiment (A2), in one embodiment, the modulus of elasticity of the second adhesive layer is lower than the modulus of elasticity of the first adhesive layer. A packaging bag produced using a laminate of such an embodiment tends to have higher impact resistance, accordingly higher resistance to drop-induced package rupture, and also higher seal strength. This is probably because the second adhesive layer, which has a low modulus of elasticity, can suppress the separation of the surface layer of the second substrate and therefore reduce a decrease in the laminate strength of the second substrate and the sealant layer.

When the second adhesive layer has the modulus of elasticity of the embodiment (A2), in one embodiment, the modulus of elasticity of the second adhesive layer is higher than the modulus of elasticity of the first adhesive layer. A packaging bag produced using a laminate of such an embodiment tends to have higher tearability and accordingly higher openability.

When the second adhesive layer has the modulus of elasticity of the embodiment (A2), in one embodiment, the second adhesive layer preferably has a thickness of 1.0 μm or more, more preferably 1.5 μm or more, still more preferably 2.0 μm or more, particularly preferably 2.5 μm or more, and preferably 10.0 μm or less, more preferably 8.0 μm or less, still more preferably 6.0 μm or less, particularly preferably 5.0 μm or less, for example, 1.0 μm or more and 10.0 μm or less. In this embodiment, the thickness of the second adhesive layer relative to the thickness of the entire laminate is preferably 1.0% or more, more preferably 1.5% or more, still more preferably 2.0% or more, particularly preferably 2.5% or more, and is preferably 10.0% or less, more preferably 8.0% or less, still more preferably 6.0% or less, particularly preferably 4.0% or less. A laminate including such a second adhesive layer tends to have high laminate strength even after heat treatment.

When the second adhesive layer has the modulus of elasticity of the embodiment (A2), in one embodiment, the thickness of the first adhesive layer is larger than the thickness of the second adhesive layer. When a print layer is provided on a surface of the first substrate facing the first adhesive layer, the first adhesive layer can appropriately cover a difference in the level caused by the print layer, and a packaging bag with a good appearance tends to be produced. The ratio of the thickness 1 of the first adhesive layer to the thickness 2 of the second adhesive layer (thickness 1/thickness 2) may be, for example, 0.4 or more, 0.6 or more, or 0.8 or more, and when the first adhesive layer has a larger thickness than the second adhesive layer, the ratio is more than 1.0 and may be 2.5 or less, 1.8 or less, or 1.2 or less.

In one embodiment (B2), the modulus of elasticity of a cross section of the second adhesive layer as measured with an AFM is 100 MPa or less, more preferably 90 MPa or less, still more preferably 80.0 MPa or less, 70.0 MPa or less, 60.0 MPa or less, or 50.0 MPa or less, and is preferably more than 35.0 MPa, for example, more than 35.0 MPa and 100 MPa or less. A laminate including a second adhesive layer with a modulus of elasticity equal to or lower than the upper limit tends to have high laminate strength. A second adhesive layer with such a modulus of elasticity can be formed, for example, by using a solvent-free adhesive described later and appropriately changing the type and molecular weight of a polymer component contained in a main agent described later, the type of curing agent, the mole ratio (NCO/OH), and aging conditions.

When the second adhesive layer has the modulus of elasticity of the embodiment (B2), in one embodiment, the second adhesive layer preferably has a thickness of 3.0 μm or less, more preferably 2.5 μm or less, still more preferably 2.0 μm or less, still more preferably 1.5 μm or less, and preferably 0.5 μm or more, more preferably 0.8 μm or more, still more preferably 1.0 μm or more, for example, 0.5 μm or more and 3.0 μm or less. In this embodiment, the thickness of the second adhesive layer relative to the thickness of the entire laminate is preferably 0.5% or more, more preferably 0.8% or more, still more preferably 1.0% or more, and is preferably 3.0% or less, more preferably 2.5% or less, still more preferably 2.0% or less, still more preferably 1.5% or less, for example, 0.5% or more and 3.0% or less. In one embodiment, the thickness of the second adhesive layer is smaller than the thickness of the first adhesive layer. A packaging bag produced using a laminate including such a second adhesive layer tends to have high impact resistance and accordingly high resistance to drop-induced package rupture and also have high tearability and accordingly high openability. Furthermore, the packaging bag has, for example, high recyclability.

(Adhesive Agent)

Each of the first adhesive layer and the second adhesive layer is formed of an adhesive agent. The adhesive agent that forms the first adhesive layer and the adhesive agent that forms the second adhesive layer may be the same or different. The adhesive agent may be any of a one-component adhesive, a two-component adhesive, and a non-curable adhesive, and is preferably a two-component adhesive from the perspective that the modulus of elasticity and the softening point described above can be easily adjusted to the ranges described above.

A method for producing a laminate using an adhesive agent may be a method of applying the adhesive agent to an object, then placing another object on the resulting adhesive layer, and curing the adhesive layer sandwiched therebetween. The object is, for example, a first substrate, a second substrate, or a sealant film. The step of curing the adhesive layer is hereinafter also referred to as an "aging step".

The conditions for aging the adhesive agent are described below. The aging temperature is preferably 25°C or more, more preferably 30°C or more, still more preferably 35°C or more, and is preferably 80°C or less, more preferably 70°C or less, still more preferably 60°C or less. The aging time is preferably 5 hours or more, more preferably 10 hours or more, still more preferably 20 hours or more, and is preferably 150 hours or less, more preferably 135 hours or less, still more preferably 120 hours or less. The modulus of elasticity of the adhesive layer tends to increase with the aging temperature. The modulus of elasticity of the adhesive layer tends to increase with the aging time.

The adhesive agent is, for example, a polyurethane adhesive agent, a polyester adhesive agent, a polyether adhesive agent, a rubber adhesive agent, a vinyl adhesive agent, an olefin adhesive agent, a silicone adhesive agent, an epoxy adhesive agent, or a phenolic adhesive agent. Among these, from the perspective of easily adjusting the modulus of elasticity and the softening point to the above-described ranges, a polyurethane adhesive agent, a polyester adhesive agent, and a polyether adhesive agent are preferred, a polyurethane adhesive agent and a polyester adhesive agent are more preferred, a polyurethane adhesive agent is still more preferred, and a two-component polyurethane adhesive agent is particularly preferred.

The adhesive agent may be a solvent-based adhesive or a solvent-free adhesive.

The solvent-based adhesive refers to an adhesive agent used for a method of applying an adhesive agent to an object, heating the adhesive agent in an oven or the like to volatilize a solvent in the adhesive agent, and then bonding the object to another object. In a two-component adhesive, either one or both of the main agent and the curing agent contain a solvent. The solvent is, for example, an organic solvent, more specifically, a hydrocarbon solvent, such as toluene, xylene, n-hexane, or methylcyclohexane; an ester solvent, such as ethyl acetate, n-propyl acetate, n-butyl acetate, or isobutyl acetate; an alcohol solvent, such as methanol, ethanol, isopropyl alcohol, n-butyl alcohol, or isobutyl alcohol; or a ketone solvent, such as acetone, methyl ethyl ketone, methyl isobutyl ketone, or cyclohexanone.

The solvent-free adhesive refers to an adhesive agent used for a method of applying an adhesive agent to an object and then bonding the object to another object without necessarily requiring a step of heating the adhesive agent in an oven or the like to volatilize a solvent. In a two-component adhesive, both the main agent and the curing agent contain substantially no solvent. The phrase "contain substantially no" includes a case where a solvent used as a reaction medium at the time of producing a constituent of an adhesive agent, or a constituent of the main agent and/or the curing agent in the case of a two-component adhesive, is not completely removed, and a trace amount of solvent remains in the adhesive agent or in the main agent and/or the curing agent in the case of a two-component adhesive.

The two-component polyurethane adhesive agent has a main agent and a curing agent. The two-component polyurethane adhesive agent may be of a solvent type or a solvent-free type. The two-component polyurethane adhesive agent will be described below.

The polyurethane adhesive agent has, for example, a main agent containing a polyol compound and a curing agent containing a polyisocyanate compound. A cured product (reaction product) formed by mixing such a main agent and a curing agent is, for example, polyurethane, more specifically, a polyester polyurethane, a polyether polyurethane, a polycarbonate polyurethane, or an acrylic polyurethane.

The polyol compound has two or more hydroxy groups per molecule. The polyol compound is, for example, a polyester polyurethane polyol, a polyester polyol, a polyether polyol, a polycarbonate polyol, or an acrylic polyol. Among these, from the perspective that an adhesive layer with a modulus of elasticity in the above-described range is easily formed, a polyester polyurethane polyol and a polyester polyol are preferred, a polyester polyurethane polyol is more preferred in the case of a solvent-based adhesive, and a polyester polyol is more preferred in the case of a solvent-free adhesive.

The polyester polyurethane polyol is a compound with two or more hydroxy groups, two or more ester bonds, and two or more urethane bonds per molecule, and has, for example, a polyester polyurethane structure as a main backbone. The polyester polyol is a compound with two or more hydroxy groups and two or more ester bonds per molecule, and has, for example, a polyester structure as a main backbone. The polyether polyol is a compound with two or more hydroxy groups and two or more ether bonds per molecule. The polycarbonate polyol is a compound with two or more hydroxy groups and two or more carbonate bonds per molecule.

From the perspective of coatability, a polymer component (for example, a polyol compound) contained in a main agent of a two-component solvent-based adhesive preferably has a weight-average molecular weight (Mw) of 11,000 or more, more preferably 13,000 or more, still more preferably 15,000 or more, still more preferably 18,000 or more, particularly preferably 20,000 or more, and preferably 100,000 or less, more preferably 50,000 or less, still more preferably 40,000 or less. The modulus of elasticity of the adhesive layer tends to increase as the Mw decreases, and the modulus of elasticity of the adhesive layer tends to decrease as the Mw increases. Furthermore, as the Mw decreases, the molecular chain of the polymer component tends to become shorter, the polymer component tends to become denser, and the softening point of the adhesive layer tends to increase. On the other hand, as the Mw increases, the molecular chain of the polymer component tends to become longer, and the softening point of the adhesive layer tends to decrease.

The polymer component (for example, the polyol compound) contained in the main agent preferably has a polydispersity (Mw/Mn) of 5.0 or less, more preferably 4.5 or less, still more preferably 4.0 or less, and preferably 1.5 or more, more preferably 2.0 or more, still more preferably 2.5 or more. Mn denotes the number-average molecular weight of the polymer component (for example, the polyol compound) contained in the main agent.

The average molecular weight is measured in terms of polystyrene by gel permeation chromatography (GPC) according to JIS K 7252-1: 2016. In the GPC measurement, the measuring apparatus may be HLC-8220 GPC (manufactured by Tosoh Corporation), the column may be TSKgel GHMHQ-H and TSK guard column HHQ-H connected in series, and the eluent may be dimethylformamide (DMF).

From the perspective of coatability, a polymer component (for example, a polyol compound) contained in a main agent of a two-component solvent-free adhesive preferably has a weight-average molecular weight (Mw) of 800 or more, more preferably 1,200 or more, still more preferably 2,000 or more, and preferably 10,000 or less, more preferably 8,000 or less, still more preferably 6,000 or less. The modulus of elasticity of the adhesive layer tends to increase as the Mw decreases, and the modulus of elasticity of the adhesive layer tends to decrease as the Mw increases.

The polymer component (for example, the polyol compound) contained in the main agent preferably has a polydispersity (Mw/Mn) of 2.8 or less, more preferably 2.7 or less, still more preferably 2.6 or less, particularly preferably 2.5 or less, and preferably 1.2 or more, more preferably 1.5 or more, still more preferably 2.0 or more. Mn denotes the number-average molecular weight of the polymer component (for example, the polyol compound) contained in the main agent.

The polyisocyanate compound has two or more isocyanate groups per molecule. The polyisocyanate compound is, for example, an aromatic isocyanate or an aliphatic isocyanate. The polyisocyanate compound may also be a blocked isocyanate compound produced by an addition reaction using a known isocyanate blocking agent by an appropriate traditional method.

The polyisocyanate compound is, for example, an aliphatic isocyanate compound, such as tetramethylene diisocyanate, hexamethylene diisocyanate (HDI), norbornene diisocyanate, or isophorone diisocyanate (IPDI); an aromatic isocyanate compound, such as diphenylmethane diisocyanate, hydrogenated diphenylmethane diisocyanate, xylylene diisocyanate (XDI), hydrogenated xylylene diisocyanate, tolylene diisocyanate (TDI), naphthalene diisocyanate, or $\alpha,\alpha,\alpha',\alpha'$-tetramethyl-m-xylylene diisocyanate; a dimer or a trimer (for example, an isocyanurate) derived from these compounds; or an adduct, a biuret, or an allophanate produced by reacting these compounds with a low-molecular-weight active hydrogen compound, an alkylene oxide adduct thereof, or a high-molecular-weight active hydrogen compound.

The low-molecular-weight active hydrogen compound is, for example, ethylene glycol, propylene glycol, diethylene glycol, dipropylene glycol, 1,4-butanediol, neopentyl glycol, 1,6-hexamethylene glycol, 1,8-octamethylene glycol, 1,4-cyclohexanedimethanol, m-xylylene alcohol, 1,3-bishydroxyethylbenzene, 1,4-bishydroxyethylbenzene, trimethylolethane, trimethylolpropane, glycerol, pentaerythritol, erythritol, sorbitol, ethylenediamine, monoethanolamine, diethanolamine, triethanolamine, or m-xylylenediamine, preferably trimethylolpropane. The high-molecular-weight active hydrogen compound is, for example, a polyester, a polyether polyol, or a polyamide.

The main agent containing the polyol compound and the curing agent containing the polyisocyanate compound are preferably used, for example, in such a quantitative ratio that the mole ratio (NCO/OH) of all the isocyanate groups of the polyisocyanate compound to all the hydroxy groups of the polyol compound is as described below. That is, the mole ratio (NCO/OH) is preferably 0.5 or more, more preferably 1.0 or more, still more preferably 1.5 or more, and is preferably 8.0 or less, more preferably 6.0, still more preferably 5.0 or less, and, in the case of a solvent-free adhesive, is still more preferably 4.0 or less, particularly preferably 3.0 or less. As the mole ratio (NCO/OH) increases, the modulus of elasticity of the adhesive layer tends to increase, and as the mole ratio (NCO/OH) decreases, the modulus of elasticity of the adhesive layer tends to decrease.

[Packaging Bag]

A laminate according to the present disclosure is suitably used as a packaging material. The packaging material is used to produce a packaging bag. A packaging bag according to the present disclosure includes the laminate described above. A laminate according to the present disclosure can be used as a packaging material to produce a packaging bag. In one embodiment, a packaging bag can be produced by folding a laminate according to the present disclosure in half such that a substrate or a first substrate is positioned on the outside and a sealant layer is positioned on the inside, and heat-sealing an end portion or the like of the laminate. In another embodiment, a packaging bag can be produced by stacking a plurality of laminates according to the present disclosure with sealant layers facing each other, and heat-sealing an end portion or the like of the laminates. The packaging bag may be entirely constituted by the laminate, or the packaging bag may be partially constituted by the laminate.

The packaging bag may have various forms, for example, a standing pouch type, a side seal type, a two-sided seal type, a three-sided seal type, a four-sided seal type, an envelope seal type, a butt seal type (pillow seal type), a ribbed seal type, a flat bottom seal type, a square bottom seal type, or a gusset type. The heat sealing method is, for example, bar sealing, rotating roll sealing, belt sealing, impulse sealing, high-frequency sealing, or ultrasonic sealing.

The packaging bag may have an easy-to-open portion. The easy-to-open portion is, for example, a notch portion serving as a starting point for tearing a packaging bag, or a half-cut line formed using laser processing, a cutter, or the like as a tear line for a packaging bag.

The packaging bag may have a venting mechanism. The venting mechanism is configured to allow the inside of the packaging bag to communicate with the outside to release the vapor when the vapor pressure in the packaging bag reaches a predetermined value or more, and is also configured to suppress the release of the vapor at a portion other than the venting mechanism. The venting mechanism includes, for example, a venting seal portion protruding from a side seal portion toward the inside of the packaging bag and an unsealed portion separated from a content storage portion by the venting seal portion. The unsealed portion communicates with the outside of the packaging bag. The packaging bag in which the contents are filled and the opening is heat-sealed is heated using a microwave oven or the like. This increases the internal pressure and separates the venting seal portion. The vapor is released to the outside of the packaging bag through the separated portion of the venting seal portion and through the unsealed portion.

The contents to be contained in a packaging bag include, for example, a liquid, a solid, a powder, or a gel. The contents may be a food or drink or may be a non-food or non-drink, such as a chemical product, a cosmetic product, a pharmaceutical agent, a metal component, or an electronic component. After the contents are stored in a packaging bag, the opening of the packaging bag can be heat-sealed to seal the packaging bag.

Furthermore, the contents may be a heat-sterilized food (heat-sterilized food, such as retort food, boiled food, or pasteurized beverage). A packaging bag according to the present disclosure may be a pouch containing a heat-sterilized food.

As specific examples of the packaging bag, a pouch and a standing pouch will be described below.

The pouch is a small-sized packaging bag and is used to store, for example, 1 g or more and 200 g or less of contents. The contents to be stored in a pouch include, for example, sauce, soy sauce, dressing, ketchup, syrup, cooking alcohol, or another liquid or viscous seasoning; liquid soup, powdered soup, or fruit juice; spice; pet food; liquid beverage, jelly beverage, instant food, or another food or drink; or non-food, such as a chemical product, a cosmetic product, a pharmaceutical agent, a metal component, or an electronic component.

A standing pouch is used, for example, to store 50 g or more and 2000 g or less of contents. The contents to be stored in a standing pouch include, for example, shampoo, rinse, conditioner, hand soap, body soap, aromatic, deodorant, deodorizer, insect repellent, or detergent; dressing, edible oil, mayonnaise, or another liquid or viscous seasoning; liquid beverage, jelly beverage, instant food, or another food or drink; pet food; cream; a metal component, or an electronic component.

In one embodiment, the contents of a packaging bag include pet food.

In one embodiment, a packaging bag according to the present disclosure can suppress the deterioration of the gas barrier properties even when subjected to heat treatment and is therefore suitable as a heat-sterilized pouch or a microwavable packaging bag. A packaging bag according to the present disclosure is also suitable as a microwave boiling or retort pouch. Here, the heat-sterilized pouch refers to either a pouch that can be subjected to heat sterilization treatment in a state of storing the contents or a pouch that has been subjected to heat sterilization treatment in a state of storing the contents. The microwavable packaging bag refers to a packaging bag that can be heated with a microwave oven.

The heat-sterilized pouch may be a pouch subjected to pressurized heat sterilization treatment (hereinafter also referred to as a "retort pouch"), a pouch subjected to boiling treatment (hereinafter also referred to as a "boiling pouch"), a pouch subjected to pasteurization treatment (hereinafter also referred to as "pasteurization pouch"), or the like. The retort pouch is a packaging bag that is filled with contents, such as food and drink, is sealed, and is then subjected to heat sterilization treatment (pressurized heat sterilization treatment) with water or water vapor at a temperature of more than 100°C under pressure. The boiling pouch or the pasteurization pouch is a packaging bag that is filled with contents, such as food and drink, is sealed, and is then subjected to boiling treatment at a temperature of 100°C or less.

In one embodiment, a packaging bag according to the present disclosure is a retort pouch. The pressurized heat sterilization treatment may be performed under various conditions, and the retort pouch includes any pouch subjected to a general pressurized heat sterilization treatment. For example, among pressurized heat sterilization treatments, a treatment with a treatment temperature of 105°C or more and 115°C or less may be referred to as a semi-retort treatment, a treatment with a treatment temperature of more than 115°C and less than 130°C may be referred to as a retort treatment, and a treatment with a treatment temperature of 135°C or more and 140°C or less may be referred to as a high retort treatment.

The pressurized heat sterilization treatment time is, for example, 5 minutes or more and 60 minutes or less, preferably 15 minutes or more and 40 minutes or less.

In one embodiment, a packaging bag according to the present disclosure is a retort pouch.

The oxygen permeability (unit: cc/m$^2$·day·atm) of a retort pouch according to the present disclosure is measured in accordance with JIS K 7126-2: 2006 at a temperature of 23°C and at a relative humidity of 90%.

The retort pouch preferably has an oxygen permeability of 3.0 or less, more preferably 2.0 or less, still more preferably 1.5 or less, particularly preferably 1.0 or less. A retort pouch with an oxygen permeability of 3.0 or less can be suitably used as food packaging for long-term storage.

The lower limit of the oxygen permeability of the retort pouch is preferably as low as possible and may be, for example, 0.1.

Fig. 33 illustrates a packaging bag 50 produced by bonding two laminates. The hatched area indicates a heat-sealed portion. The packaging bag 50 may have an easy-to-open portion 51. The easy-to-open portion 51 is, for example, a notch portion 52 serving as a starting point for tearing, or a half-cut line 53 formed using laser processing, a cutter, or the like as a tear line.

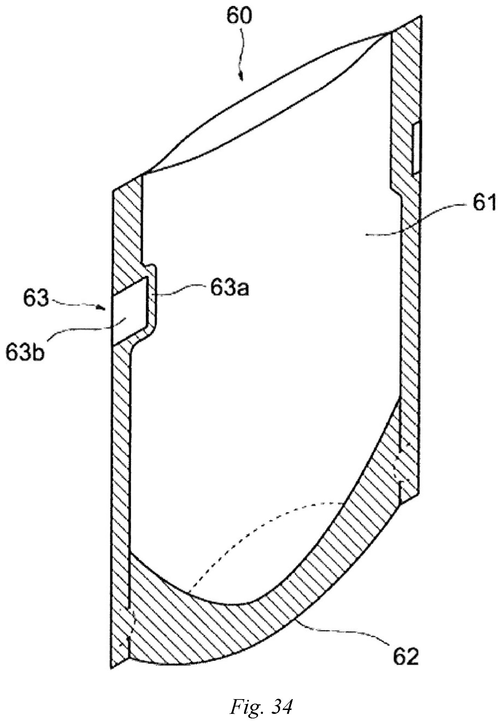

Fig. 34 schematically illustrates an example of the structure of a standing pouch. The hatched area indicates a heat-sealed portion. In one embodiment, a standing pouch 60 includes a trunk (side sheet) 61 and a bottom portion (bottom sheet) 62. The side sheet 61 and the bottom sheet 62 may be composed of the same member or different members. The bottom sheet 62 can maintain the shape of the side sheet 61 and make the pouch free-standing, thus forming a pouch of standing type. A storage space for storing contents is formed in a region surrounded by the side sheet 61 and the bottom sheet 62.

The standing pouch 60 may have a venting mechanism 63. The venting mechanism 63 includes a venting seal portion 63a protruding from the side seal portion toward the inside of the packaging bag and an unsealed portion 63b separated from a content storage portion by the venting seal portion 63a. The unsealed portion 63b communicates with the outside of the packaging bag.

In the standing pouch, only the trunk may be composed of a laminate according to the present disclosure, only the bottom portion may be composed of the laminate, or both the trunk and the bottom portion may be composed of the laminate.

In one embodiment, the side sheet can be formed by making a bag such that a sealant layer of a laminate according to the present disclosure is the innermost layer. In one embodiment, the side sheet can be formed by preparing two laminates according to the present disclosure, stacking these laminates with sealant layers facing each other, and heat-sealing side edge portions on both sides of the laminates to make a bag.

In another embodiment, the side sheet can be formed by preparing two laminates according to the present disclosure, stacking these laminates with sealant layers facing each other, inserting two laminates folded in a V shape with the sealant layers being on the outside between the laminates in the side edge portions on both sides of the stacked laminates, and heat-sealing the laminates. A standing pouch with a trunk having a side gusset can be produced in this way.

In one embodiment, the bottom sheet can be formed by inserting a laminate between lower portions of side sheets made into a bag and heat-sealing them. More specifically, the bottom sheet can be formed by inserting a laminate folded in a V shape with a sealant layer being on the outside between lower portions of side sheets made into a bag and heat-sealing them.

In one embodiment, the bottom portion is formed by preparing two laminates, stacking these laminates with sealant layers facing each other, folding another laminate into a V shape with a sealant layer being on the outside, placing the other laminate between the lower portions of the laminates facing each other, and heat-sealing them. Two sides adjacent to the bottom portion are then heat-sealed to form a trunk. Thus, a standing pouch according to one embodiment can be formed.


(Laminate)

"Indentation Hardness of Covering Layer"

A laminate according to the present disclosure has an indentation hardness of 0.9 GPa or more and 1.7 GPa or less as measured from a covering layer on a cross section of the laminate by a nanoindentation method after a packaging bag is produced as a packaging material and after the heat sterilization treatment. When the indentation hardness is within the above range, deterioration of the gas barrier properties of a laminate according to the present disclosure after retort treatment can be suppressed.

The covering layer preferably has an indentation hardness of 1.0 GPa or more, more preferably 1.1 GPa or more, and preferably 1.6 GPa or less, more preferably 1.5 GPa or less. More specifically, a more preferred range is 1.1 GPa or more and 1.5 GPa or less.

The indentation hardness of the covering layer is calculated by the following formula (1):

$$\text{Indentation hardness} = \text{Pmax}/A \quad (1)$$

wherein

Pmax: maximum load (unit: $\mu$N), and
A: projected contact area at maximum depth (unit: $\mu$m$^2$).

For the measurement of the indentation hardness of a covering layer in a laminate after heat sterilization treatment, the laminate after the heat sterilization treatment is embedded in an epoxy resin or the like and is pretreated with a microtome to expose a cross section of the covering layer. Thus, the measurement can be performed by the nanoindentation method from the "cross section" of the covering layer of the laminate. This method enables the measurement of the indentation hardness of the covering layer without separation of the laminate to expose the covering layer. The cross section is prepared by cutting in the thickness direction perpendicular to the main surface of the film. The cross section can be prepared by preparing a block in which the film was embedded in an embedding resin and cutting the block with a commercially available rotary microtome in a room temperature (23°C) environment. Finishing can be performed with a diamond knife.

In the measurement of the indentation hardness of the cross section of the covering layer by the nanoindentation method, first, an indenter is brought into contact with the cross section of the covering layer, is pushed in from the cross section to a load of 15 $\mu$N over 10 seconds, and is held for 5 seconds. The portion into which the indenter is pushed is near the central portion of the covering layer in the thickness direction in the portion where the cross section of the covering layer is exposed. The load is then removed over 10 seconds. Thus, the maximum load Pmax, the projected contact area A at the maximum depth, and a load-displacement curve are obtained. The measurement is performed in an environment of a relative humidity of 50% and 23°C unless otherwise specified. The measurement is performed at five or more points on the same cross section, and the indentation hardness is defined as an arithmetic mean of the values of five points measured with good reproducibility. Further detailed conditions of the measurement are those described in Examples.

The indentation hardness of the covering layer can be adjusted, for example, by the composition of the covering layer, the drying temperature at the time of forming the covering layer, or the like.

"Composite Modulus of Elasticity of Covering Layer"

A laminate according to the present disclosure preferably has a composite modulus of elasticity of 5.0 GPa or more, more preferably 6.0 GPa or more, and preferably 9.5 GPa or less, more preferably 9.0 GPa or less, as measured from a covering layer on a cross section of the laminate by a nanoindentation method after a packaging bag is produced as a packaging material and after the heat sterilization treatment. More specifically, a preferred range is 5.0 GPa or more and 9.5 GPa or less, and a more preferred range is 6.0 GPa or more and 9.0 GPa or less.

The composite modulus of elasticity of the covering layer is calculated by the following formula (2):
[Math. 1]

$$\text{Composite modulus of elasticity} = \frac{S\sqrt{\pi}}{2\sqrt{A}} \quad \cdot\cdot\cdot (2)$$

wherein

Pmax: maximum load (unit: $\mu$N),
A: projected contact area at maximum depth (unit: $\mu$m$^2$), and
S: contact stiffness.

For the measurement of the composite modulus of elasticity of a covering layer in a laminate after heat sterilization treatment, the laminate after the heat sterilization treatment is embedded in an epoxy resin or the like and is pretreated with a microtome to expose a cross section of the covering layer. Thus, the measurement can be performed by the nanoindentation method from the "cross section" of the covering layer of the laminate. This method enables the measurement of the composite modulus of elasticity of the covering layer without separation of the laminate to expose the covering layer. The cross section is prepared by cutting in the thickness direction perpendicular to the main surface of the film. The cross section can be prepared by preparing a block in which the film was embedded in an embedding resin and cutting the block with a commercially available rotary microtome in a room temperature (23°C) environment. Finishing can be performed with a diamond knife.

In the measurement of the composite modulus of elasticity of the cross section of the covering layer by the nanoindentation method, first, an indenter is brought into contact with the cross section of the covering layer, is pushed in from the cross section to a load of 15 $\mu$N over 10 seconds, and is held for 5 seconds. The portion into which the indenter is pushed is near the central portion of the covering layer in the thickness direction in the portion where the cross section of the covering layer is exposed. The load is then removed over 10 seconds. Thus, the maximum load Pmax, the projected contact area A at the maximum depth, and a load-displacement curve are obtained. The measurement is performed in an environment of a relative humidity of 50% and 23°C unless otherwise specified. The measurement is performed at five or more points on the same cross section, and the composite modulus of elasticity is defined as an arithmetic mean of the values of five points measured with good reproducibility. Further detailed conditions of the measurement are those described in Examples.

The composite modulus of elasticity of the covering layer can be adjusted, for example, by the composition of the covering layer, the drying temperature at the time of forming the covering layer, or the like.

"Modulus of Elasticity of Adhesive Layer"

In a laminate according to the present disclosure, a cross section of an adhesive layer adjacent (or close) to a covering layer constituting a barrier film has a modulus of elasticity of 100.0 MPa or less as measured with an atomic force microscope (AFM). The modulus of elasticity is preferably 50.0 MPa or less, more preferably 40.0 MPa or less, still more preferably 35.0 MPa or less, particularly preferably 30.0 MPa or less.

More specifically, when a laminate according to the present disclosure has a two-layer structure in which a barrier film, an adhesive layer, and a sealant layer are stacked in this order, and the barrier film is disposed such that a covering layer constituting the barrier film faces the adhesive layer, the adhesive layer adjacent to the covering layer has a modulus of elasticity of 100.0 MPa or less.

When a laminate according to the present disclosure has a three-layer structure in which a first substrate, a first adhesive layer, a barrier film including a second substrate, a second adhesive layer, and a sealant layer are stacked in this order, and the barrier film is disposed such that a covering layer constituting the barrier film faces the second adhesive layer, the second adhesive layer adjacent to the covering layer has a modulus of elasticity of 100.0 MPa or less.

When a laminate according to the present disclosure has a three-layer structure in which a first substrate, a first adhesive layer, a barrier film including a second substrate, a second adhesive layer, and a sealant layer are stacked in this order, and the barrier film is disposed such that a covering layer constituting the barrier film faces the first adhesive layer side, the first adhesive layer adjacent to the covering layer has a modulus of elasticity of 100.0 MPa or less.

When a laminate according to the present disclosure has a three-layer structure in which a barrier film including a first, a first adhesive layer, a second substrate, a second adhesive layer, and a sealant layer are stacked in this order, and the barrier film is disposed such that a covering layer constituting the barrier film faces the first adhesive layer side, the first adhesive layer adjacent to the covering layer has a modulus of elasticity of 100.0 MPa or less.

In a laminate according to the present disclosure, the use of an adhesive layer with a modulus of elasticity of 100.0 MPa or less as an adhesive layer in contact with a covering layer with an indentation hardness of 0.9 GPa or more and 1.7 GPa or less can reduce damage to the covering layer during heat sterilization treatment, such as retort treatment. This can suppress the deterioration of the gas barrier properties after the heat sterilization treatment, such as retort treatment.

In a laminate according to the present disclosure, the use of an adhesive layer with a modulus of elasticity of 35.0 MPa or less can more effectively reduce damage to a covering layer during heat sterilization treatment, such as retort treatment. This can further suppress the deterioration of the gas barrier properties after the heat sterilization treatment, such as retort treatment.

Furthermore, in a laminate according to the present disclosure, the use of a covering layer with a nanoindentation hardness of 1,1 GPa or more and 1.5 GPa or less and a composite modulus of elasticity of 6.0 GPa or more and 9.0 GPa or less can more effectively reduce damage to the covering layer during heat sterilization treatment, such as retort treatment. This can further suppress the deterioration of the gas barrier properties after the heat sterilization treatment, such as retort treatment.

A laminate according to the present disclosure can achieve an oxygen permeability of 2.0 cc/m$^2$·day·atm or less at 23°C and 90% RH in accordance with JIS K 7126-2 after retort treatment. Furthermore, an oxygen permeability of 1.0 cc/m$^2$·day·atm or less can be achieved in a preferred embodiment.

In a laminate according to the present disclosure, a covering layer can achieve an oxygen permeability of 3.0 cc/m$^2$·day·atm or less at 23°C and 90% RH in accordance with JIS K 7126-2 after high retort treatment, and an oxygen permeability of 2.0 cc/m$^2$·day·atm or less can be achieved in a preferred embodiment.

<Mechanism of Action>

As described above, a laminate according to the present disclosure includes a barrier film, which includes a substrate (barrier substrate) including a polypropylene stretched substrate, an inorganic oxide layer on a surface of the substrate, and an a covering layer on the inorganic oxide layer, the covering layer constituting the barrier film has an indentation hardness of 0.9 GPa or more, and the adhesive layer adjacent to (or close to) the covering layer has a modulus of elasticity of 100.0 MPa or less. In this way, a soft adhesive layer adjacent to a hard covering layer can produce a buffering effect during heat sterilization treatment, such as retort treatment, and can reduce damage to the covering layer. Thus, in a laminate according to the present disclosure, even after heat sterilization treatment, such as retort treatment, the barrier functions of a covering layer and an inorganic oxide layer function without being impaired, so that the deterioration of the gas barrier properties can be suppressed.

The present disclosure relates to, for example, the following [1] to [11].

[1] A laminate including at least:

a barrier film in which a substrate, an inorganic oxide layer, and a barrier covering layer are stacked in this order;

an adhesive layer; and

a sealant layer,

wherein the substrate includes a stretched substrate containing polypropylene as a main component,

the sealant layer contains polypropylene as a main component,

the barrier film is disposed such that the covering layer faces the adhesive layer,

a cross section of the adhesive layer in the laminate has a modulus of elasticity of 100.0 MPa or less as measured with an atomic force microscope (AFM), and

an indentation hardness measured from a cross section of the covering layer in the laminate by a nanoindentation method is 0.9 GPa or more and 1.7 GPa or less.

[2] The laminate according to [1], wherein the modulus of elasticity is 35.0 MPa or less.

[3] The laminate according to [1] or [2], wherein a composite modulus of elasticity measured from a cross section of the covering layer in the laminate by the nanoindentation method is 5.0 GPa or more and 9.5 GPa or less.

[4] The laminate according to any one of [1] to [3], wherein the laminate includes the barrier film, the adhesive layer, and the sealant layer in this order in a thickness direction.

[5] The laminate according to any one of [1] to [3], wherein the laminate includes a first substrate, a second substrate, the adhesive layer, and the sealant layer in this order in a thickness direction,

the first substrate and the second substrate include a stretched substrate containing polypropylene as a main component, and

the barrier film includes the second substrate as the substrate.

[6] The laminate according to any one of [1] to [3], wherein the laminate includes a first substrate, a first adhesive layer, a second substrate, a second adhesive layer, and the sealant layer in this order in a thickness direction,

the first substrate and the second substrate include a stretched substrate containing polypropylene as a main component,

the barrier film includes the first substrate or the second substrate as the substrate,

the barrier film is disposed such that the covering layer faces the first adhesive layer, and

a modulus of elasticity measured for a cross section of the first adhesive layer in the laminate using the atomic force microscope (AFM) is 100.0 MPa or less.

[7] The laminate according to [6], wherein the barrier film includes the second substrate as the substrate.

[8] The laminate according to any one of [1] to [7], wherein a polypropylene content relative to a total amount of resin material contained in the laminate is 80% or more by mass.

[9] The laminate according to [8], which is a packaging material.

[10] A packaging bag including the laminate according to [9].

[11] The packaging bag according to [10], which is a pouch for storing a heat-sterilized food.

[12] A heat-sterilized pouch including the packaging bag according to [10] or [11], and

a heat-sterilized food stored in the packaging bag,
wherein the packaging bag has an oxygen permeability of 3.0 cc/m²·day·atm or less.

EXAMPLES

A laminate and a packaging bag according to the present disclosure will be more specifically described below based on specific examples.

[Barrier Film]

(Barrier Film A)

An acrylic resin with a hydroxy group (number-average molecular weight: 25,000, glass transition temperature: 99°C, hydroxyl value: 80 mg KOH/g) was diluted with a mixed solvent of methyl ethyl ketone and ethyl acetate (mixing ratio: 1:1) to a solid concentration of 10% by mass to prepare a main agent. An ethyl acetate solution containing tolylene diisocyanate (solid content: 75% by mass) was added to the main agent as a curing agent to prepare a solution for forming a surface coating layer. The amount of the curing agent used was 10 parts by mass per 100 parts by mass of the main agent.

A biaxially stretched polypropylene film with a corona-treated surface and with a thickness of 20 $\mu$m (ME-1 manufactured by Mitsui Chemicals Tohcello, Inc.) was prepared. The solution for forming a surface coating layer was applied to the corona-treated surface of the film and was dried to form a surface coating layer with a thickness of 0.2 $\mu$m. Thus, a resin substrate was produced.

On the surface coating layer of the resin substrate, a vapor-deposited film (inorganic oxide layer) of aluminum oxide (AlOx) with a thickness of 10 nm was formed while applying tension to the resin substrate by roll to roll using a low-temperature plasma chemical vapor deposition apparatus, which is a real apparatus (PVD method).

Poly(vinyl alcohol) (PVA) with a degree of saponification of 99% or more and a polymerization degree of 2400 as a water-soluble polymer was mixed with a liquid containing water and isopropyl alcohol at a ratio of 95/5 to prepare a solution A adjusted to have a solid content of 4%.

Water, isopropyl alcohol, and 1 N hydrochloric acid were mixed at a ratio of 65/34/1 to prepare a solution B.

Tetraethoxysilane as a metal alkoxide was prepared as a solution C.

The solution B and the solution C were mixed by adjusting the ratio thereof to prepare a solution D, and the solution A and the solution D were mixed by adjusting the ratio thereof to prepare a barrier coating agent (VC) 1.

The ratio of the solution B to the solution C and the ratio of the solution A to the solution D were adjusted so that the solid content of the barrier coating agent 1 after mixing was 7% and the mass of the tetraethoxysilane in terms of $SiO_2$ relative to the solid content of the PVA was 2.25.

The barrier coating agent 1 prepared above was applied to the vapor-deposited film (inorganic oxide layer) by a direct gravure method. The barrier coating agent 1 was then dried at 100°C to form a barrier coating layer (covering layer) with a dry thickness of 300 nm.

An aging treatment was then performed at 40°C for 7 days to prepare a barrier film A, which included a biaxially stretched polyethylene film with a thickness of 20 $\mu$m, the surface coating layer with a thickness of 0.2 $\mu$m, the aluminum oxide deposited film with a thickness of 10 nm, and the barrier coating layer with a thickness of 300 nm in this order.

(Barrier Film B)

A barrier film B was prepared in the same manner as in the barrier film A except that the barrier coating agent for forming the barrier coating layer (covering layer) was a barrier coating agent 2, in which the ratio of the solution B to the solution C and the ratio of the solution A to the solution D were adjusted such that the solid content was 7% and the mass of the tetraethoxysilane in terms of $SiO_2$ was 2.75 relative to the solid content of PVA.

(Barrier Film C)

A barrier film C was prepared in the same manner as in the barrier film A except that silica (SiOx) was formed at a thickness of 30 nm by a CVD method instead of aluminum oxide by the PVD method during the formation of the inorganic oxide layer and that the barrier coating agent for forming the barrier coating layer (covering layer) was a barrier coating agent 3 prepared by adding 5% of glycidoxypropyltrimethoxysilane relative to the weight of tetraethoxysilane at the time of mixing the solution B and the solution C and adjusting the ratio of the solution B to the solution C and the ratio of the solution A to the solution D such that the solid content was 7% and the mass of the tetraethoxysilane in terms of $SiO_2$ was 3.5 relative to the solid content of PVA.

(Barrier Film D)

A barrier film D was prepared in the same manner as in the barrier film A except that the barrier coating agent for forming the barrier coating layer (covering layer) was a barrier coating agent 4 prepared by adding 5% of glycidoxypropyltrimethoxysilane relative to the weight of tetraethoxysilane at the time of mixing the solution B and the solution C and adjusting the ratio of the solution B to the solution C and the ratio of the solution A to the solution D such that as the covering layer the solid content was 7% and the mass of the tetraethoxysilane in terms of $SiO_2$ was 1.5 relative to the solid content of PVA.

(Barrier Film E)

A barrier film E was prepared in the same manner as in the barrier film A except that silica (SiOx) was formed at a thickness of 30 nm by a CVD method instead of aluminum oxide by the PVD method during the formation of the inorganic oxide layer and that the barrier coating agent for forming the barrier coating layer (covering layer) was a barrier coating agent 5 prepared by adding 5% of glycidoxypropyltrimethoxysilane relative to the weight of tetraethoxysilane at the time of mixing the solution B and the solution C and adjusting the ratio of the solution B to the solution C and the ratio of the solution A to the solution D such that as the covering layer the solid content was 7% and the mass of the tetraethoxysilane in terms of $SiO_2$ was 4.0 relative to the solid content of PVA.

[Adhesive Agent]

A two-component adhesive composed of the following main agent and curing agent was used.

- Adhesive agent A

    Main agent: a polyester polymer (Mw: 22,000)

    Curing agent: a mixture of a biuret of hexamethylene diisocyanate (HDI) and a nurate of HDI

    Mole ratio of main agent to curing agent (NCO/OH): 2.0

    The adhesive agent A contains ethyl acetate as a solvent.

- Adhesive agent B

    Main agent: a polyester polyurethane polymer (Mw: 30,000)
    Curing agent: a mixture of an isophorone diisocyanate (IPDI) trimer and a trimethylolpropane (TMP) adduct of xylylene diisocyanate (XDI)
    Mole ratio of main agent to curing agent (NCO/OH): 4.0
    The adhesive agent B contains ethyl acetate as a solvent.

- Adhesive agent C

Main agent: a polyester polymer (Mw: 4,000)
Curing agent: a mixture of HDI and XDI
Mole ratio of main agent to curing agent (NCO/OH): 2.0
The adhesive agent C contains substantially no solvent.

- Adhesive agent D

Main agent: a polyester polymer (Mw: 3,500)
Curing agent: a mixture of IPDI and HDI (the HDI content is higher than the IPDI content)
Mole ratio of main agent to curing agent (NCO/OH): 2.0
The adhesive agent D contains substantially no solvent.

- Adhesive agent E

Main agent: a polyester polymer (Mw: 22,000)
Curing agent: a mixture of a biuret of hexamethylene diisocyanate (HDI) and a nurate of HDI
Mole ratio of main agent to curing agent (NCO/OH): 1.5
The adhesive agent E contains ethyl acetate as a solvent.

- Adhesive agent F

Main agent: a polyester polymer (Mw: 22,000)
Curing agent: a mixture of a biuret of hexamethylene diisocyanate (HDI) and a nurate of HDI
Mole ratio of main agent to curing agent (NCO/OH): 1.0
The adhesive agent F contains ethyl acetate as a solvent.

- Adhesive agent G

Main agent: a polyester polyurethane polymer (Mw: 30,000)
Curing agent: a mixture of an isophorone diisocyanate (IPDI) trimer and a trimethylolpropane (TMP) adduct of xylylene diisocyanate (XDI)
Mole ratio of main agent to curing agent (NCO/OH): 4.5
The adhesive agent G contains ethyl acetate as a solvent.

- Adhesive agent H

Main agent: a polyester polyurethane polymer (Mw: 30,000)
Curing agent: a mixture of an isophorone diisocyanate (IPDI) trimer and a trimethylolpropane (TMP) adduct of xylylene diisocyanate (XDI)
Mole ratio of main agent to curing agent (NCO/OH): 5.0
The adhesive agent H contains ethyl acetate as a solvent.

- Adhesive agent I

Main agent: a polyester polymer (Mw: 4,000)
Curing agent: a mixture of HDI and XDI
Mole ratio of main agent to curing agent (NCO/OH): 2.5
The adhesive agent I contains substantially no solvent.

- Adhesive agent J

Main agent: a polyester polymer (Mw: 4,000)
Curing agent: a mixture of HDI and XDI
Mole ratio of main agent to curing agent (NCO/OH): 3.0
The adhesive agent J contains substantially no solvent.

[Example 1]

A biaxially stretched polypropylene film (manufactured by Toyobo Co., Ltd., P2171, hereinafter also referred to as a "BOPP film") with a corona-treated surface and with a thickness of 20 $\mu$m was prepared as a first substrate. The barrier film A was prepared. An unstretched polypropylene film (manufactured by Okamoto Industries, Inc., ET-20, hereinafter also referred to as a "CPP film") with a corona-treated surface and with a thickness of 60 $\mu$m was prepared as a sealant layer.

The adhesive agent A was applied to the corona-treated surface of the first substrate by a gravure roll coating method, and the adhesive layer surface formed on the first substrate and the covering layer (barrier coating layer) surface of the barrier film were bonded to each other and were aged at 40°C for 72 hours. Furthermore, the non-barrier coating layer surface of the barrier film was subjected to a corona treatment, the adhesive agent A was applied by the gravure roll coating method, and the adhesive layer surface formed on the barrier film and the corona-treated surface of the CPP film were bonded to each other and were aged at 40°C for 72 hours. Each adhesive layer formed had a thickness of 3.15 $\mu$m.

Thus, a laminate according to Example 1 was produced. The laminate had a layer configuration of BOPP film (20 $\mu$m)/adhesive agent A layer (3.15 $\mu$m)/barrier film A (20.51 $\mu$m)/adhesive agent A layer (3.15 $\mu$m)/CPP film (60 $\mu$m). Each value in parentheses indicates the thickness of the corresponding layer.

[Example 2]

A laminate of Example 2 was prepared in the same manner as in Example 1 except that the barrier film B was used.

The laminate had a layer configuration of BOPP film (20 $\mu$m)/adhesive agent A layer (3.15 $\mu$m)/barrier film B (20.51 $\mu$m)/adhesive agent A layer (3.15 $\mu$m)/CPP film (60 $\mu$m). Each value in parentheses indicates the thickness of the corresponding layer.

[Example 3]

A laminate of Example 3 was prepared in the same manner as in Example 1 except that the barrier film C was used, and the adhesive agent B was used to bond the corona-treated surface of the first substrate to the surface of the barrier film C on the covering layer side and to bond the surface of the barrier film C on the non-covering layer side to the corona-treated surface of the CPP film.

The laminate had a layer configuration of BOPP film (20 $\mu$m)/adhesive agent B layer (3.15 $\mu$m)/barrier film C (20.51 $\mu$m)/adhesive agent B layer (3.15 $\mu$m)/CPP film (60 $\mu$m). Each value in parentheses indicates the thickness of the corresponding layer.

[Example 4]

A laminate of Example 4 was prepared in the same manner as in Example 3 except that the adhesive agent C was used and the thickness of each adhesive layer was 1.35 $\mu$m.

The laminate had a layer configuration of BOPP film (20 $\mu$m)/adhesive agent C layer (1.35 $\mu$m)/barrier film C (20.51 $\mu$m)/adhesive agent C layer (1.35 $\mu$m)/CPP film (60 $\mu$m). Each value in parentheses indicates the thickness of the corresponding layer.

[Example 5]

A laminate of Example 5 was prepared in the same manner as in Example 3 except that the adhesive agent D was used and the thickness of each adhesive layer was 1.35 $\mu$m.

The laminate had a layer configuration of BOPP film (20 $\mu$m)/adhesive agent D layer (1.35 $\mu$m)/barrier film C (20.51 $\mu$m)/adhesive agent D layer (1.35 $\mu$m)/CPP film (60 $\mu$m). Each value in parentheses indicates the thickness of the corresponding layer.

[Example 6]

A laminate of Example 6 was prepared in the same manner as in Example 1 except that the adhesive agent E was used.

The laminate had a layer configuration of BOPP film (20 $\mu$m)/adhesive agent E layer (3.15 $\mu$m)/barrier film A (20.51 $\mu$m)/adhesive agent E layer (3.15 $\mu$m)/CPP film (60 $\mu$m). Each value in parentheses indicates the thickness of the corresponding layer.

[Example 7]

A laminate of Example 7 was prepared in the same manner as in Example 1 except that the adhesive agent F was used.

The laminate had a layer configuration of BOPP film (20 μm)/adhesive agent F layer (3.15 μm)/barrier film A (20.51 μm)/adhesive agent F layer (3.15 μm)/CPP film (60 μm). Each value in parentheses indicates the thickness of the corresponding layer.

[Example 8]

A laminate of Example 8 was prepared in the same manner as in Example 3 except that the adhesive agent G was used.

The laminate had a layer configuration of BOPP film (20 μm)/adhesive agent G layer (3.15 μm)/barrier film C (20.51 μm)/adhesive agent G layer (3.15 μm)/CPP film (60 μm). Each value in parentheses indicates the thickness of the corresponding layer.

[Example 9]

A laminate of Example 9 was prepared in the same manner as in Example 3 except that the adhesive agent H was used.

The laminate had a layer configuration of BOPP film (20 μm)/adhesive agent H layer (3.15 μm)/barrier film C (20.51 μm)/adhesive agent H layer (3.15 μm)/CPP film (60 μm). Each value in parentheses indicates the thickness of the corresponding layer.

[Example 10]

A laminate of Example 10 was prepared in the same manner as in Example 4 except that the adhesive agent I was used.

The laminate had a layer configuration of BOPP film (20 μm)/adhesive agent I layer (1.35 μm)/barrier film C (20.51 μm)/adhesive agent I layer (1.35 μm)/CPP film (60 μm). Each value in parentheses indicates the thickness of the corresponding layer.

[Example 11]

A laminate of Example 11 was prepared in the same manner as in Example 4 except that the adhesive agent J was used.

The laminate had a layer configuration of BOPP film (20 μm)/adhesive agent J layer (1.35 μm)/barrier film C (20.51 μm)/adhesive agent J layer (1.35 μm)/CPP film (60 μm). Each value in parentheses indicates the thickness of the corresponding layer.

[Example 12]

A laminate of Example 12 was prepared in the same manner as in Example 1 except that the aging at 40°C for 72 hours was not performed after the adhesive layer surface formed on the first substrate and the covering layer (barrier coating layer) surface of the barrier film were bonded to each other.

The laminate had a layer configuration of BOPP film (20 μm)/adhesive agent A layer (3.15 μm)/barrier film A (20.51 μm)/adhesive agent A layer (3.15 μm)/CPP film (60 μm). Each value in parentheses indicates the thickness of the corresponding layer.

[Example 13]

A laminate of Example 13 was prepared in the same manner as in Example 12 except that the aging conditions after bonding the adhesive layer surface formed on the barrier film and the corona-treated surface of the CPP film were changed to 60 hours at 40°C.

The laminate had a layer configuration of BOPP film (20 μm)/adhesive agent A layer (3.15 μm)/barrier film A (20.51 μm)/adhesive agent A layer (3.15 μm)/CPP film (60 μm). Each value in parentheses indicates the thickness of the corresponding layer.

[Example 14]

A laminate of Example 14 was prepared in the same manner as in Example 12 except that the aging conditions after bonding the adhesive layer surface formed on the barrier film and the corona-treated surface of the CPP film were changed to 48 hours at 40°C.

The laminate had a layer configuration of BOPP film (20 μm)/adhesive agent A layer (3.15 μm)/barrier film A (20.51 μm)/adhesive agent A layer (3.15 μm)/CPP film (60 μm). Each value in parentheses indicates the thickness of the corresponding layer.

[Comparative Example 1]

A laminate of Comparative Example 1 was prepared in the same manner as in Example 1 except that the barrier film D was used.

The laminate had a layer configuration of BOPP film (20 μm)/adhesive agent A layer (3.15 μm)/barrier film D (20.51 μm)/adhesive agent A layer (3.15 μm)/CPP film (60 μm). Each value in parentheses indicates the thickness of the corresponding layer.

[Comparative Example 2]

A laminate of Comparative Example 2 was prepared in the same manner as in Example 1 except that the barrier film E was used.

The laminate had a layer configuration of BOPP film (20 μm)/adhesive agent A layer (3.15 μm)/barrier film E(20.51 μm)/adhesive agent A layer (3.15 μm)/CPP film (60 μm). Each value in parentheses indicates the thickness of the corresponding layer.

[Comparative Example 3]

A laminate of Comparative Example 3 was prepared in the same manner as in Comparative Example 1 except that the adhesive agent C was used as an adhesive agent between the first substrate and the barrier film D and the thickness of the adhesive agent C layer was 1.35 μm.

The laminate had a layer configuration of BOPP film (20 μm)/adhesive agent C layer (1.35 μm)/barrier film D (20.51 μm)/adhesive agent A layer (3.15 μm)/CPP film (60 μm). Each value in parentheses indicates the thickness of the corresponding layer.

[Comparative Example 4]

A laminate of Comparative Example 4 was prepared in the same manner as in Comparative Example 1 except that the adhesive agent D was used as an adhesive agent between the first substrate and the barrier film D and the thickness of the adhesive agent D layer was 1.35 μm.

The laminate had a layer configuration of BOPP film (20 μm)/adhesive agent D layer (1.35 μm)/barrier film D (20.51 μm)/adhesive agent A layer (3.15 μm)/CPP film (60 μm). Each value in parentheses indicates the thickness of the corresponding layer.

Table 1 shows the layer configurations of the laminates of Examples 1 to 14 and Comparative Examples 1 to 4.

[Example 15]

The covering layer (barrier coating layer) surface of the barrier film B was subjected to a corona treatment, the adhesive agent B was applied by a gravure roll coating method, and the adhesive layer surface formed on the barrier film B and the corona-treated surface of the CPP film were bonded to each other and were aged at 40°C for 72 hours. Each adhesive layer formed had a thickness of 3.15 μm.

Thus, a laminate according to Example 15 was produced. The laminate had a layer configuration of barrier film B (20.51 μm)/adhesive agent B layer (3.15 μm)/CPP film (60 μm). Each value in parentheses indicates the thickness of the corresponding layer.

Table 2 shows the layer configuration of the laminate of Example 15

[Measurement of Modulus of Elasticity]

The laminates prepared in Examples 1 to 15 and Comparative Examples 1 to 4 were subjected to force curve measurement with an atomic force microscope (AFM) to determine the modulus of elasticity of a cross section of the adhesive layer from the resulting force curve.

A specific measurement procedure is as described below.

A block in which the laminate prepared in each example described above was embedded in an embedding resin was prepared and was cut with a commercially available rotary microtome in a room temperature (25°C) environment to prepare a cross section of the laminate. The cross section is prepared by cutting in the thickness direction perpendicular to the main surface of the laminate. Finishing was performed with a diamond knife.

Using an atomic force microscope (AFM), mapping measurement was performed on a 2.5-$\mu$m square including a cross section of the adhesive layer with respect to the cross section. In the cross section of the adhesive layer, 20 force curves with which an appropriate force curve shape was obtained were selected. The modulus of elasticity was calculated by fitting each force curve according to the Johnson-Kendall-Roberts (JKR) theory to calculate the arithmetic mean of 20 elastic moduli (hereinafter also referred to as a "first arithmetic mean"). The force curve was selected near the central portion of the adhesive layer in the thickness direction in a portion where the cross section of the adhesive layer was exposed. Three elastic moduli close to the first arithmetic mean were selected from the 20 elastic moduli to calculate an arithmetic mean of the three elastic moduli (hereinafter also referred to as a "second arithmetic mean"). The second arithmetic mean was defined as the modulus of elasticity of a cross section of the adhesive layer. Tables 3 and 4 show the results.

Details of the measurement conditions for the AFM are described below.

(Measurement of Modulus of Elasticity with AFM)

- Apparatus name: SPM-9700HT (manufactured by Shimadzu Corporation)

- Measurement atmosphere: in the atmosphere, at room temperature (25°C)

- Measurement mode: contact mode

- Calibration method: measuring cantilever sensitivity using glass

- Number of measurement points: 64 x 64 points (4096 points in total)

- Viewing angle range: 2.5-$\mu$m square

- Cantilever type: CONTR (manufactured by NanoWorld)

- Tip radius of cantilever: < 8 nm

- Spring constant of cantilever: 0.2 N/m

- Contact pressure: 0.5 V

- Scanning speed: 3 Hz

- Elastic modulus calculation model: Johnson-Kendall-Roberts (JKR) theory

- Poisson's ratio of sample: 0.4

- Analysis software: Nano 3D Mapping (manufactured by Shimadzu Corporation)

[Measurement of Indentation Hardness and Composite Modulus of Elasticity (after Retort Treatment)]

Two of the laminates prepared in Examples 1 to 15 and Comparative Examples 1 to 4 were prepared and were stacked with the surfaces of the sealant layers (CPP films) facing each other, and three sides thereof were heat-sealed under conditions of 180°C, 0.1 MPa, and 1 second to produce a flat pouch of B5 size (182 mm x 257 mm). The pouch was filled with 100 mL of water through the opening, and the opening was heat-sealed under the conditions described above to seal the pouch. The pouch was subjected to retort sterilization under retort conditions of 121°C, 30 minutes, and 0.21 MPa or under high retort conditions of 135°C, 30 minutes, and 0.35 MPa. After each retort sterilization, the laminate was cut out from the pouch to prepare a test specimen. Using this test specimen, the indentation hardness (GPa) and the composite modulus of elasticity (GPa) of the covering layer were measured by the following method. Tables 3 and 4 show the results.

Measuring apparatus: TI-950 TriboIndenter manufactured by HYSITRON

Measurement point: from a cross section side of the covering layer

Measurement mode: indentation

Indenter: cubecorner indenter, TI-0037

Measurement profile

-    0 to 10 s: 0 $\to$ 15 $\mu$N

-    10 to 15 s: 15 $\mu$N

-    15 to 25 s: 15 $\to$ 0 $\mu$N

[Evaluation of Gas Barrier Properties (after Retort Treatment)]

Two of the laminates prepared in Examples 1 to 15 and Comparative Examples 1 to 4 were prepared and were stacked with the surfaces of the sealant layers (CPP films) facing each other, and three sides thereof were heat-sealed under conditions of 180°C, 0.1 MPa, and 1 second to produce a flat pouch of B5 size (182 mm x 257 mm). The pouch was filled with 100 mL of water through the opening, and the opening was heat-sealed under the conditions described above to seal the pouch. The pouch was subjected to retort sterilization under retort conditions of 121°C, 30 minutes, and 0.21 MPa or under high retort conditions of 135°C, 30 minutes, and 0.35 MPa. After each retort sterilization, the laminate was cut out from the pouch to prepare a test specimen. This test specimen was used to measure the oxygen permeability (cc/m$^2$·day·atm) by the following method. Tables 3 and 4 show the results.

While the test specimen was set so that the first substrate side thereof was the oxygen supply side, the oxygen permeability was measured with an oxygen permeability measuring apparatus (manufactured by MOCON, OX-TRAN2/20) in accordance with JIS K 7126-2: 2006 in an environment of a temperature of 23°C and a relative humidity of 90%. Tables 3 and 4 show the results.

[Evaluation of Openability]

Each of the laminates prepared in Examples 1 to 15 and Comparative Examples 1 to 4 was folded in a V shape so that the sealant film side was on the inside, and was heat-sealed so as to have a width of 130 mm and a height of 165 mm to prepare a bag-shaped pouch. At this time, the direction parallel to the height direction was defined as the TD direction of the laminate. The pouch was filled with 100 mL of water from the opening, and the opening was hermetically heat-sealed. The sealed pouch was subjected to a retort sterilization treatment of a hot water type at a retort temperature of 121°C for a retort time of 30 minutes. The pouch after the retort sterilization treatment was cut by hand in parallel to the width direction (in the MD direction of the laminate) and was opened. Tables 3 and 4 show the results.

<Evaluation Criteria>

AA: Smoothly cut without being caught.

A: Slightly caught, but smoothly cut.

B: Cut to the end while being caught.

C: Caught and not cut to the end.

D: Each layer was separated and not cut due to delamination or the like.

[Polypropylene Content]

Tables 3 and 4 show the polypropylene content relative to the total amount of resin material contained in each laminate prepared in Examples 1 to 15 and Comparative Examples 1 to 4.

[Table 1]

| | First substrate | First adhesive layer | | | | | Second adhesive layer | | | | | Covering layer | | Inorganic oxide layer | |
|---|---|---|---|---|---|---|---|---|---|---|---|---|---|---|---|
| | | Type | Thickness (μm) | Elastic modulus (MPa) | Mole ratio NCO/OH | Aging conditions | Type | Thickness (μm) | Elastic modulus (MPa) | Mole ratio NCO/OH | Aging conditions | Coating agent | Dry thickness (nm) | Vapor deposition method | Inorganic oxide |
| Example 1 | Polypropylene stretched substrate | Adhesive agent A | 3.15 | 28.2 | 2.0 | 40°C 72 h | Adhesive agent A | 3.15 | 28.2 | 2.0 | 40°C 72 h | VC1 | 300 | PVD | AlOx |
| Example 2 | Polypropylene stretched substrate | Adhesive agent A | 3.15 | 28.2 | 2.0 | 40°C 72 h | Adhesive agent A | 3.15 | 28.2 | 2.0 | 40°C 72 h | VC2 | 300 | PVD | AlOx |
| Example 3 | Polypropylene stretched substrate | Adhesive agent B | 3.15 | 20.4 | 4.0 | 40°C 72 h | Adhesive agent B | 3.15 | 20.4 | 4.0 | 40°C 72 h | VC3 | 300 | CVD | SiOx |
| Example 4 | Polypropylene stretched substrate | Adhesive agent C | 1.35 | 67.2 | 2.0 | 40°C 72 h | Adhesive agent C | 1.35 | 67.2 | 2.0 | 40°C 72 h | VC3 | 300 | CVD | SiOx |
| Example 5 | Polypropylene stretched substrate | Adhesive agent D | 1.35 | 35.3 | 2.0 | 40°C 72 h | Adhesive agent D | 1.35 | 35.3 | 2.0 | 40°C 72 h | VC3 | 300 | CVD | SiOx |
| Example 6 | Polypropylene stretched substrate | Adhesive agent E | 3.15 | 23.4 | 1.5 | 40°C 72 h | Adhesive agent E | 3.15 | 23.4 | 1.5 | 40°C 72 h | VC1 | 300 | PVD | AlOx |
| Example 7 | Polypropylene stretched substrate | Adhesive agent F | 3.15 | 18.2 | 1.0 | 40°C 72 h | Adhesive agent F | 3.15 | 18.2 | 1.0 | 40°C 72 h | VC1 | 300 | PVD | AlOx |
| Example 8 | Polypropylene stretched substrate | Adhesive agent G | 3.15 | 24.6 | 4.5 | 40°C 72 h | Adhesive agent G | 3.15 | 24.6 | 4.5 | 40°C 72 h | VC3 | 300 | CVD | SiOx |
| Example 9 | Polypropylene stretched substrate | Adhesive agent H | 3.15 | 26.7 | 5.0 | 40°C 72 h | Adhesive agent H | 3.15 | 26.7 | 5.0 | 40°C 72 h | VC3 | 300 | CVD | SiOx |
| **Example** 10 | Polypropylene stretched substrate | Adhesive agent I | 1.35 | 75.1 | 2.5 | 40°C 72 h | Adhesive agent I | 1.35 | 75.1 | 2.5 | 40°C 72 h | VC3 | 300 | CVD | SiOx |

(continued)

| | First substrate | First adhesive layer | | | | | Second adhesive layer | | | | | Covering layer | | Inorganic oxide layer | |
|---|---|---|---|---|---|---|---|---|---|---|---|---|---|---|---|
| | | Type | Thickness ($\mu$m) | Elastic modulus (MPa) | Mole ratio NCO/OH | Aging conditions | Type | Thickness ($\mu$m) | Elastic modulus (MPa) | Mole ratio NCO/OH | Aging conditions | Coating agent | Dry thickness (nm) | Vapor deposition method | Inorganic oxide |
| Example 11 | Polypropylene stretched substrate | Adhesive agent J | 1.35 | 77.4 | 3.0 | 40°C 72 h | Adhesive agent J | 1.35 | 77.4 | 3.0 | 40°C 72 h | VC3 | 300 | CVD | SiOx |
| Example 12 | Polypropylene stretched substrate | Adhesive agent A | 3.15 | 28.2 | 2.0 | - | Adhesive agent A | 3.15 | 28.2 | 2.0 | 40°C 72 h | VC1 | 300 | PVD | AlOx |
| Example 13 | Polypropylene stretched substrate | Adhesive agent A | 3.15 | 24.8 | 2.0 | - | Adhesive agent A | 3.15 | 24.8 | 2.0 | 40°C 72 h | VC1 | 300 | PVD | AlOx |
| Example 14 | Polypropylene stretched substrate | Adhesive agent A | 3.15 | 18.3 | 2.0 | - | Adhesive agent A | 3.15 | 18.3 | 2.0 | 40°C 72 h | VC1 | 300 | PVD | AlOx |
| Comparative example 1 | Polypropylene stretched substrate | Adhesive agent A | 3.15 | 28.2 | 2.0 | 40°C 72 h | Adhesive agent A | 3.15 | 28.2 | 2.0 | 40°C 72 h | VC4 | 300 | PVD | AlOx |
| Comparative example 2 | Polypropylene stretched substrate | Adhesive agent A | 3.15 | 28.2 | 2.0 | 40°C 72 h | Adhesive agent A | 3.15 | 28.2 | 2.0 | 40°C 72 h | VC5 | 300 | CVD | SiOx |
| Comparative example 3 | Polypropylene stretched substrate | Adhesive agent C | 1.35 | 67.2 | 2.0 | 40°C 72 h | Adhesive agent A | 3.15 | 28.2 | 2.0 | 40°C 72 h | VC4 | 300 | PVD | AlOx |
| Comparative example 4 | Polypropylene stretched substrate | Adhesive agent D | 1.35 | 35.3 | 2.0 | 40°C 72 h | Adhesive agent A | 3.15 | 28.2 | 2.0 | 40°C 72 h | VC5 | 300 | CVD | SiOx |

[Table 2]

| | Sealant layer | Adhesive layer | | | | | Covering layer | | Inorganic oxide layer | |
|---|---|---|---|---|---|---|---|---|---|---|
| | | Type | Thickness (μm) | Elastic modulus (MPa) | Mole ratio (NCO/OH) | Aging conditions | Coating agent | Dry thickness (nm) | Vapor deposition method | Inorganic oxide |
| Example 15 | Polypropylene unstretched substrate | Adhesive agent B | 3.15 | 20.4 | 4 | 40°C 72 h | VC2 | 300 | CVD | SiOx |

[Table 3]

| | Indentation hardness (Gpa) | | Composite modulus of elasticity (Gpa) | | Oxygen permeability (cc/m²·day·atm) | | Evaluation of openability | Monomaterialization rate |
|---|---|---|---|---|---|---|---|---|
| | After retort treatment (121°C) | After retort treatment (135°C) | After retort treatment (121°C) | After retort treatment (135°C) | After retort treatment (121°C) | After retort treatment (135°C) | | |
| Example 1 | 1.1 | 1.1 | 6.7 | 6.4 | 0.7 | 1.9 | B | 93.0 |
| Example 2 | 1.3 | 1.2 | 9.2 | 8.7 | 0.4 | 2.4 | B | 93.0 |
| Example 3 | 1.4 | 1.3 | 7.4 | 7.7 | 0.5 | 1.0 | AA | 93.0 |
| Example 4 | 1.5 | 1.4 | 7.0 | 8.5 | 1.5 | 2.4 | AA | 96.6 |
| Example 5 | 1.7 | 1.5 | 8.2 | 8.2 | 1.3 | 2.1 | AA | 96.6 |
| Example 6 | 1.1 | 1.1 | 6.7 | 6.4 | 0.7 | 1.9 | C | 93.0 |
| Example 7 | 1.1 | 1.1 | 6.7 | 6.4 | Unmeasurable due to delamination | Unmeasurable due to delamination | Unmeasurable due to delamination | 93.0 |
| Example 8 | 1.4 | 1.3 | 7.4 | 7.7 | 0.7 | 1.4 | C | 93.0 |
| Example 9 | 1.4 | 1.3 | 7.4 | 7.7 | 1.0 | 1.9 | D | 93.0 |
| Example 10 | 1.5 | 1.4 | 7.0 | 8.5 | 2.0 | 3.5 | C | 96.6 |
| Example 11 | 1.5 | 1.4 | 7.0 | 8.5 | 2.4 | 5.3 | D | 96.6 |
| Example 12 | 1.1 | 1.1 | 6.7 | 6.4 | 0.7 | 1.9 | AA | 93.0 |
| Example 13 | 1.1 | 1.1 | 6.7 | 6.4 | 0.8 | 1.2 | C | 93.0 |
| Example 14 | 1.1 | 1.1 | 6.7 | 6.4 | Unmeasurable due to delamination | Unmeasurable due to delamination | Unmeasurable due to delamination | 93.0 |
| Comparative example 1 | 0.6 | 0.8 | 4.2 | 5.1 | fail(>50cc) | fail(>50cc) | B | 93.0 |
| Comparative example 2 | 1.8 | 1.6 | 8.1 | 9.6 | 3.9 | 24.2 | B | 93.0 |
| Comparative example 3 | 0.6 | 0.8 | 4.2 | 5.1 | fail(>50cc) | fail(>50cc) | A | 94.7 |

(continued)

| | Indentation hardness (Gpa) | | Composite modulus of elasticity (Gpa) | | Oxygen permeability (cc/m²·day·atm) | | Evaluation of openability | Monomaterialization rate |
|---|---|---|---|---|---|---|---|---|
| | After retort treatment (121°C) | After retort treatment (135°C) | After retort treatment (121°C) | After retort treatment (135°C) | After retort treatment (121°C) | After retort treatment (135°C) | | |
| Comparative example 4 | 1.8 | 1.6 | 8.1 | 9.6 | 4.3 | 27.8 | A | 94.7 |

[Table 4]

| | Indentation hardness (Gpa) | | Composite modulus of elasticity(Gpa) | | Oxygen permeability (cc/m²·day·atm) | | Evaluation of openability | Monomaterialization rate |
|---|---|---|---|---|---|---|---|---|
| | After retort treatment (121°C) | After retort treatment (135°C) | After retort treatment (121°C) | After retort treatment (135°C) | After retort treatment (121°C) | After retort treatment (135°C) | | |
| Example 15 | 1.3 | 1.3 | 7.5 | 7.5 | 0.4 | 1.7 | B | 95.2 |

Reference Signs List

1 laminate
11 first substrate
20 barrier film
21 second substrate (substrate)
22 surface coating layer
23 inorganic oxide layer
24 covering layer
25 polypropylene layer
26 adhesive resin layer
27 surface resin layer
30 sealant layer
40 adhesive layer
40A first adhesive layer
40B second adhesive layer
50 packaging bag
51 easy-to-open portion
52 notch portion
53 half-cut line
60 standing pouch
61 trunk (side sheet)
62 bottom portion (bottom sheet)
63 venting mechanism
63a venting seal portion
63b unsealed portion
100 test specimen
110 chuck

**Claims**

1. A laminate comprising at least:

   a barrier film in which a substrate, an inorganic oxide layer, and a barrier covering layer are stacked in this order;
   an adhesive layer; and
   a sealant layer,
   wherein the substrate includes a stretched substrate containing polypropylene as a main component,
   the sealant layer contains polypropylene as a main component,
   the barrier film is disposed such that the covering layer faces the adhesive layer,
   a cross section of the adhesive layer in the laminate has a modulus of elasticity of 100.0 MPa or less as measured with an atomic force microscope (AFM), and
   an indentation hardness measured from a cross section of the covering layer in the laminate by a nanoindentation method is 0.9 GPa or more and 1.7 GPa or less.

2. The laminate according to claim 1, wherein the modulus of elasticity is 35.0 MPa or less.

3. The laminate according to claim 1, wherein a composite modulus of elasticity measured from a cross section of the covering layer in the laminate by the nanoindentation method is 5.0 GPa or more and 9.5 GPa or less.

4. The laminate according to claim 1, wherein the laminate comprises the barrier film, the adhesive layer, and the sealant layer in this order in a thickness direction.

5. The laminate according to claim 1, wherein

   the laminate includes a first substrate, a second substrate, the adhesive layer, and the sealant layer in this order in a thickness direction,
the first substrate and the second substrate include a stretched substrate containing polypropylene as a main component, and
the barrier film includes the second substrate as the substrate.

6. The laminate according to claim 1, wherein

the laminate includes a first substrate, a first adhesive layer, a second substrate, a second adhesive layer, and the sealant layer in this order in a thickness direction,
the first substrate and the second substrate include a stretched substrate containing polypropylene as a main component,
the barrier film includes the first substrate or the second substrate as the substrate,
the barrier film is disposed such that the covering layer faces the first adhesive layer, and
a modulus of elasticity measured for a cross section of the first adhesive layer in the laminate using the atomic force microscope (AFM) is 100.0 MPa or less.

7. The laminate according to claim 6, wherein the barrier film includes the second substrate as the substrate.

8. The laminate according to any one of claims 1 to 7, wherein a polypropylene content relative to a total amount of resin material contained in the laminate is 80% or more by mass.

9. The laminate according to claim 8, which is a packaging material.

10. A packaging bag comprising the laminate according to claim 9.

11. The packaging bag according to claim 10, which is a pouch for storing a heat-sterilized food.

12. A heat-sterilized pouch comprising:

the packaging bag according to claim 10 or 11; and
a heat-sterilized food stored in the packaging bag,
wherein the packaging bag has an oxygen permeability of 3.0 cc/m$^2$·day·atm or less.

*Fig. 1*

*Fig. 2*

*Fig. 3*

Fig. 4

Fig. 5

Fig. 6

*Fig. 7*

*Fig. 8*

*Fig. 9*

*Fig. 10*

*Fig. 11*

Fig. 12

Fig. 13

*Fig. 14*

*Fig. 15*

*Fig. 16*

*Fig. 17*

Fig. 18

Fig. 19

Fig. 20

Fig. 21

1

11

40A

24
23
22

21

20

40B

30

*Fig. 22*

1

11

40A

24
23

27

25

20

21

40B

30

*Fig. 23*

*Fig. 24*

*Fig. 25*

*Fig. 26*

*Fig. 27*

*Fig. 28*

*Fig. 29*

Fig. 30

Fig. 31

Fig. 32

Fig. 33

*Fig. 34*

## INTERNATIONAL SEARCH REPORT

| | International application No. |
|---|---|
| | **PCT/JP2024/029980** |

**A. CLASSIFICATION OF SUBJECT MATTER**

*B32B 27/32*(2006.01)i; *B32B 7/022*(2019.01)i; *B32B 9/00*(2006.01)i; *B32B 27/00*(2006.01)i; *B65D 65/40*(2006.01)i; *C08J 7/00*(2006.01)i; *C08J 7/048*(2020.01)i
FI:  B32B27/32 102; B32B7/022; B32B9/00 A; B32B27/00; B32B27/32; B65D65/40 D; C08J7/00 306; C08J7/048 CES

According to International Patent Classification (IPC) or to both national classification and IPC

**B. FIELDS SEARCHED**

Minimum documentation searched (classification system followed by classification symbols)

B32B27/32; B32B7/022; B32B9/00; B32B27/00; B65D65/40; C08J7/00; C08J7/048

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022/085586 A1 (TOPPAN PRINTING CO., LTD.) 28 April 2022 (2022-04-28) | 1-12 |
| A | JP 2020-200392 A (TOPPAN PRINTING CO., LTD.) 17 December 2020 (2020-12-17) | 1-12 |
| A | JP 2023-63171 A (DAI NIPPON PRINTING CO., LTD.) 09 May 2023 (2023-05-09) | 1-12 |
| A | JP 2023-77283 A (DAI NIPPON PRINTING CO., LTD.) 05 June 2023 (2023-06-05) | 1-12 |
| A | JP 2023-79681 A (TOPPAN PRINTING CO., LTD.) 08 June 2023 (2023-06-08) | 1-12 |
| A | WO 2021/065888 A1 (DAI NIPPON PRINTING CO., LTD.) 08 April 2021 (2021-04-08) | 1-12 |
| A | WO 2018/181900 A1 (DAI NIPPON PRINTING CO., LTD.) 04 October 2018 (2018-10-04) | 1-12 |
| A | WO 2018/021478 A1 (DAI NIPPON PRINTING CO., LTD.) 01 February 2018 (2018-02-01) | 1-12 |
| A | JP 7296507 B1 (TOPPAN PRINTING CO., LTD.) 22 June 2023 (2023-06-22) | 1-12 |

☐ Further documents are listed in the continuation of Box C.      ☑ See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X"  document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| **05 November 2024** | **19 November 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/029980**

| Patent document cited in search report | | | Publication date (day/month/year) | Patent family member(s) | | | Publication date (day/month/year) |
|---|---|---|---|---|---|---|---|
| WO | 2022/085586 | A1 | 28 April 2022 | US | 2023/0257172 | A1 | |
| | | | | EP | 4234235 | A1 | |
| | | | | CN | 116323210 | A | |
| JP | 2020-200392 | A | 17 December 2020 | (Family: none) | | | |
| JP | 2023-63171 | A | 09 May 2023 | (Family: none) | | | |
| JP | 2023-77283 | A | 05 June 2023 | (Family: none) | | | |
| JP | 2023-79681 | A | 08 June 2023 | (Family: none) | | | |
| WO | 2021/065888 | A1 | 08 April 2021 | US | 2022/0402250 | A1 | |
| | | | | EP | 4039464 | A1 | |
| WO | 2018/181900 | A1 | 04 October 2018 | US | 2020/0047960 | A1 | |
| | | | | EP | 3603955 | A1 | |
| WO | 2018/021478 | A1 | 01 February 2018 | US | 2019/0240956 | A1 | |
| | | | | EP | 3492258 | A1 | |
| JP | 7296507 | B1 | 22 June 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023135998 A
- JP 2023180829 A
- JP 2024068684 A
- JP 2005053223 A